# EUROPÄISCHE PATENTSCHRIFT

(11) **EP 2 686 186 B1**
(45) Veröffentlichungstag und Bekanntmachung des Hinweises auf die Patenterteilung: **06.04.2016**
(21) Anmeldenummer: 12702500.5
(22) Anmeldetag: 01.02.2012
(51) Int. Cl.: B60K 6/48, B60K 6/547, F16H 3/00, F16H 3/093

(54) **HYBRIDANTRIEB EINES KRAFTFAHRZEUGS**
HYBRID DRIVE OF A MOTOR VEHICLE
ENTRAÎNEMENT HYBRIDE DE VÉHICULE À MOTEUR

(30) Priorität: 15.03.2011 DE 102011005532
(43) Veröffentlichungstag der Anmeldung: 22.01.2014
(73) Patentinhaber: ZF Friedrichshafen AG, 88038 Friedrichshafen (DE)
(72) Erfinder: KALTENBACH, Johannes, 88048 Friedrichshafen (DE); REISCH, Matthias, 88214 Ravensburg (DE)
(86) Internationale Anmeldenummer: PCT/EP2012/051632
(87) Internationale Veröffentlichungsnummer: WO 2012/123171

(56) Entgegenhaltungen:
- DE-A1-102007 049 266
- DE-A1-102007 049 271
- JP-A- 2010 203 605
- US-A1- 2005 139 035
- TENBERGE P: "Double-Clutch Transmission - Power-Shiftable Winding Transmission", VDI BERICHTE, DUESSELDORF, DE, Bd. 1665, 13. März 2002 (2002-03-13), Seiten 1033-1050, XP009094673, ISSN: 0083-5560

## Beschreibung

Die Erfindung betrifft einen Hybridantrieb eines Kraftfahrzeugs gemäß dem Oberbegriff der Ansprüche 1 und 5.

Ein Schaltgetriebe eines Hybridantriebs der vorgenannten Bauart weist einen verbrennungsmotorischen Kraftübertragungszweig und einen elektromotorischen Kraftübertragungszweig auf, die an der Ausgangswelle zusammengeführt sind. Der verbrennungsmotorische Kraftübertragungszweig umfasst die eine Eingangswelle, die Gangradsätze der ersten zugeordneten Gruppe sowie die Ausgangswelle, und ermöglicht die Übertragung eines Drehmomentes zwischen dem Verbrennungsmotor und den mit der Ausgangswelle in Triebverbindung stehenden Antriebsrädern des Kraftfahrzeugs. Der elektromotorische Kraftübertragungszweig umfasst die andere Eingangswelle, die Gangradsätze der zweiten zugeordneten Gruppe sowie die Ausgangswelle, und ermöglicht die Übertragung eines Drehmomentes zwischen der Elektromaschine und den Antriebsrädern des Kraftfahrzeugs. Somit ist über einen geschalteten Gangradsatz der ersten zugeordneten Gruppe ein rein verbrennungsmotorischer Fahrbetrieb, über einen geschalteten Gangradsatz der zweiten zugeordneten Gruppe ein rein elektromotorischer Fahrbetrieb, sowie über jeweils einen geschalteten Gangradsatz beider Gruppe ein Kombinationsfahrbetrieb beider Aggregate (Verbrennungsmotor und Elektromaschine) mit einem motorischen oder generatorischen Betrieb der Elektromaschine möglich. Auch können Gangwechsel innerhalb einer Gruppe von Gangradsätzen als Lastschaltungen durchgeführt werden, indem die Zugkraft während des Gangwechsels durch das der anderen Gruppe von Gangradsätzen zugeordnete Aggregat (Verbrennungsmotor oder Elektromaschine) über einen dort geschalteten Gangradsatz zumindest teilweise aufrecht erhalten wird.

Aus DE 10 2007 049271 ist ein Hybridantrieb nach dem Oberbegriff der Ansprüche 1 und 5 bekannt.

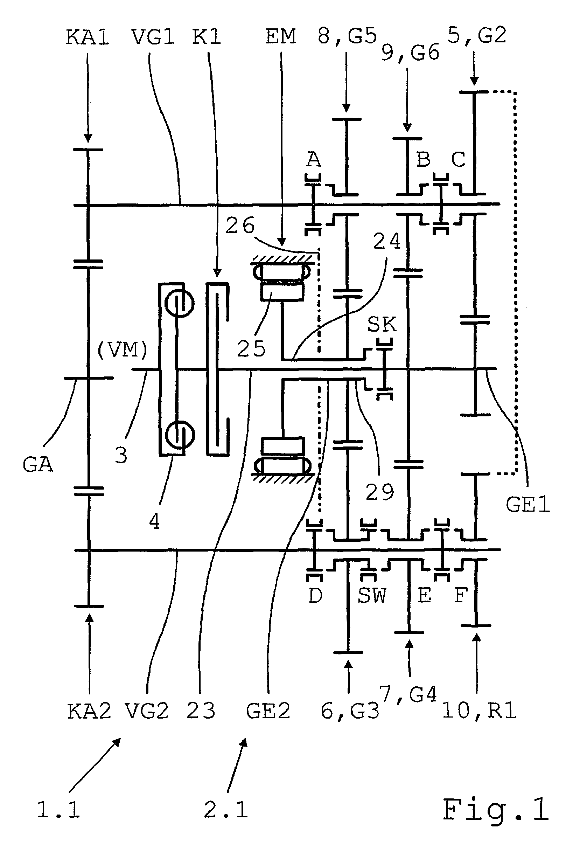

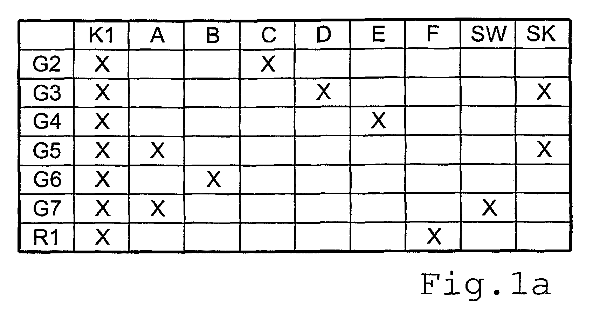

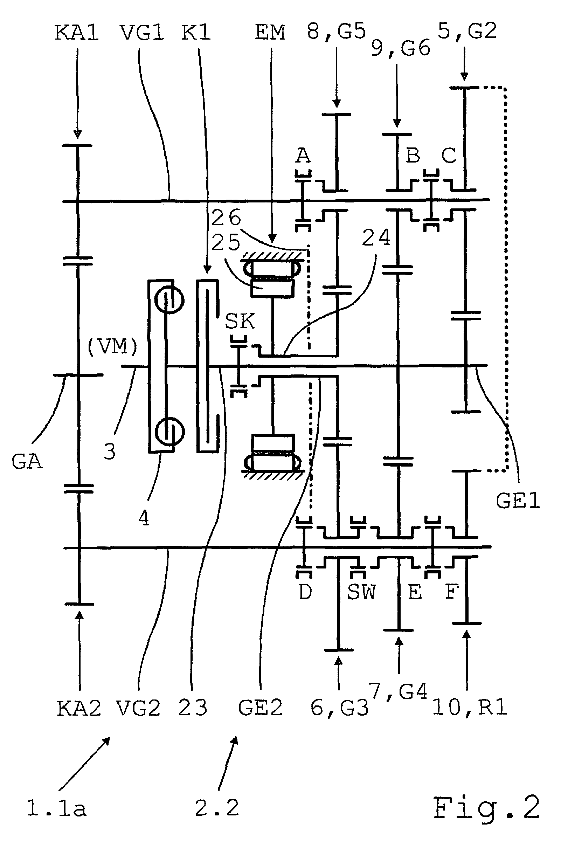

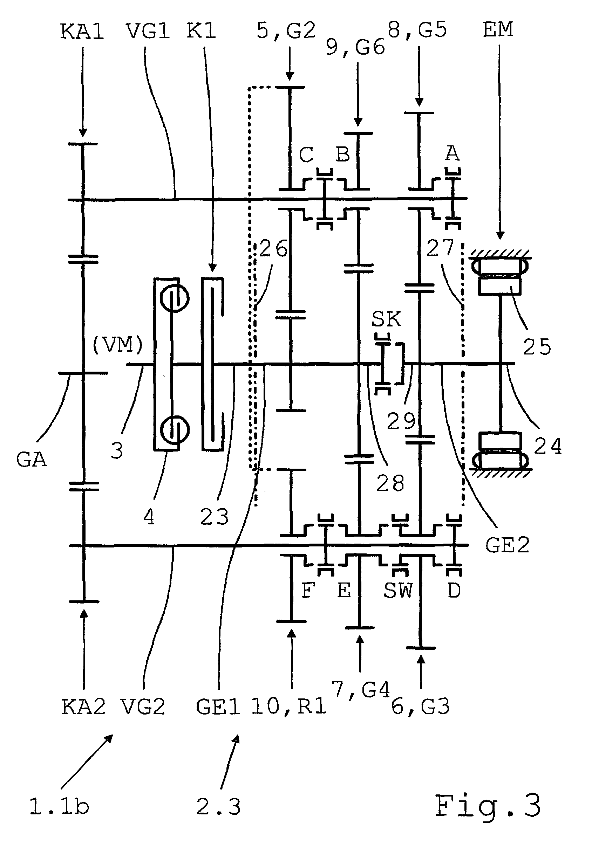

In der DE 199 60 621 B4 ist ein Hybridantrieb mit drei Ausführungsformen eines speziellen Schaltgetriebes beschrieben. In allen Ausführungsformen weist der verbrennungsmotorische Kraftübertragungszweig des Schaltgetriebes eine erste Vorgelegewelle auf, die eingangsseitig über eine Eingangskonstante, eine erste Eingangswelle und eine Reibungskupplung mit der Triebwelle eines Verbrennungsmotors und ausgangsseitig über eine erste Gruppe selektiv schaltbarer Gangradsätze mit einer Ausgangswelle in Triebverbindung bringbar ist. In der ersten Ausführungsform gemäß der dortigen Fig. 1 ist eine zweite Eingangswelle als eine zweite Vorgelegewelle ausgebildet, die drehfest mit dem Rotor einer Elektromaschine verbunden und über eine zweite Gruppe selektiv schaltbarer Gangradsätze mit der Ausgangswelle in Triebverbindung bringbar ist. Durch eine zwischen dem vorgelegeseitigen Triebrad einer zwischen der ersten Eingangswelle und der zweiten Vorgelegewelle angeordneten Triebstufe und der zweiten Vorgelegewelle angeordneten Schaltkupplung sind die beiden Eingangswellen miteinander koppelbar. In der zweiten und dritten Ausführungsform nach den dortigen Figuren 2 und 3 ist die zweite Eingangswelle als eine hohle Rotorwelle gebildet, die koaxial über der ersten Eingangswelle angeordnet und drehfest mit dem Rotor einer koaxial über der ersten Eingangswelle angeordneten Elektromaschine verbunden ist. Die Rotorwelle steht über eine zweite Eingangskonstante mit der zweiten Vorgelegewelle in Triebverbindung, die über die zweite Gruppe selektiv schaltbarer Gangradsätze mit der Ausgangswelle in Triebverbindung bringbar ist. Durch eine zwischen der ersten Eingangswelle und der Rotorwelle angeordnete Schaltkupplung sind die beiden Eingangswellen miteinander koppelbar.

Bei einem weiteren derartigen Hybridantrieb, der aus der WO 2008/138387 A1 bekannt ist, sind die beiden Eingangswellen des betreffenden Schaltgetriebes als Vorgelegewellen ausgebildet. Die erste Eingangs- bzw. Vorgelegewelle des verbrennungsmotorischen Kraftübertragungszweiges ist eingangsseitig über eine steuerbare Trennkupplung mit der Triebwelle eines Verbrennungsmotors verbindbar und ausgangsseitig über eine erste Gruppe selektiv schaltbarer Gangradsätze mit einer Ausgangswelle in Triebverbindung bringbar. Die zweite Eingangs- bzw. Vorgelegewelle des elektromotorischen Kraftübertragungszweiges ist eingangsseitig drehfest mit dem Rotor einer Elektromaschine verbunden und ausgangsseitig über eine zweite Gruppe selektiv schaltbarer Gangradsätze mit der Ausgangswelle in Triebverbindung bringbar. Die Gangradsätze beider Gruppen sind unter Nutzung jeweils eines gemeinsamen, auf der Ausgangswelle angeordneten Abtriebsrads in gemeinsamen Radialebenen angeordnet, was eine relativ geringe axiale Baulänge ergibt. Die Losräder und die zugeordneten, in einem Schaltpaket zusammengefassten Gangkupplungen von zwei axial benachbarten Gangradsätzen der zweiten Gruppe sind auf der Ausgangswelle angeordnet. Hierdurch können die beiden Vorgelegewellen unabhängig von der Schaltung eines der betreffenden Gangradsätze über eine der betreffenden, auf der Vorgelegewelle angeordneten Gangkupplungen miteinander gekoppelt werden.

Nachteilig an den beiden vorgenannten Hybridantrieben ist jedoch, dass es sich bei den betreffenden Schaltgetrieben um Spezialkonstruktionen handelt, die entsprechend teuer herstellbar sind.

Dagegen sind aus der nicht vorveröffentlichten DE 10 2010 030 569 A1 mehrere Ausführungen eines derartigen Hybridantriebs bekannt, bei dem das betreffende Schaltgetriebe aus einem Doppelkupplungsgetriebe mit zwei koaxial angeordneten Eingangswellen sowie einer gemeinsamen Ausgangswelle abgeleitet und demzufolge kostengünstiger herstellbar ist. Während die zentral angeordnete erste Eingangswelle über eine Trennkupplung mit der Triebwelle des Verbrennungsmotors verbindbar ist, steht die als Hohlwelle ausgebildete und koaxial über der ersten Eingangswelle angeordnete zweite Eingangswelle unmittelbar oder über eine Eingangsgetriebestufe mit dem Rotor der Elektromaschine in Triebverbindung. Die schaltbaren Gangradsätze sind jeweils zwischen einer von zwei über jeweils eine Eingangskonstante mit einer der Eingangswellen in Triebverbindung stehenden Vorgelegewellen und der Ausgangswelle angeordnet, wobei jeweils zwei unterschiedlichen Vorgelegewellen zugeordnete Gangradsätze unter Anordnung der Losräder auf der jeweiligen Vorgelegewelle und unter Nutzung eines gemeinsamen, auf der Ausgangswelle angeordneten Festrades in einer gemeinsamen Radialebene angeordnet sind. Ein getriebeextern unmittelbar zwischen den beiden Eingangswellen angeordnetes Koppel-Schaltelement zur Kopplung der beiden Eingangswellen ist als eine Reibungskupplung oder als eine Klauenkupplung ausgebildet.

Nachteilig an dem zuletzt genannten Hybridantrieb ist jedoch, dass die axiale Baulänge des Schaltgetriebes aufgrund der axialen Staffelung der Gangradsätze und der Eingangskonstanten noch relativ groß ist. Dies führt zwangsläufig zu axial großen Abmessungen des gesamten Hybridantriebs, was dessen Verwendung in einem Kraftfahrzeug besonders bei einer Front-Quer-Anordnung zumindest erschwert.

Der vorliegenden Erfindung liegt daher die Aufgabe zugrunde, einen Hybridantrieb der eingangs genannten Art vorzuschlagen, dessen Schaltgetriebe trotz einer hohen Anzahl schaltbarer Gangstufen eine besonders geringe axiale Baulänge aufweist.

Diese Aufgabe wird bei einem Hybridantrieb mit den Merkmalen der Ansprüche 1 und oder 5 gelöst.

Die Erfindung geht demnach aus von einem an sich bekannten Hybridantrieb eines Kraftfahrzeugs, der ein aus einem Doppelkupplungsgetriebe mit zwei koaxial angeordneten Eingangswellen und einer gemeinsamen Ausgangswelle abgeleitetes automatisiertes Schaltgetriebe aufweist, dessen eine Eingangswelle mit der Triebwelle eines Verbrennungsmotors verbindbar und über eine zugeordnete erste Gruppe selektiv schaltbarer Gangradsätze mit der Ausgangswelle in Triebverbindung bringbar ist, und dessen andere Eingangswelle mit dem Rotor einer als Motor und als Generator betreibbaren Elektromaschine in Triebverbindung steht und über eine zugeordnete zweite Gruppe selektiv schaltbarer Gangradsätze mit der Ausgangswelle in Triebverbindung bringbar ist.

Um einen axial besonders kurz bauenden Hybridantrieb mit einem vielstufigen Schaltgetriebe zu schaffen, ist gemäß der Erfindung außerdem vorgesehen, dass die Gangradsätze des Schaltgetriebes jeweils zwischen einer der beiden Eingangswellen und einer von zwei über jeweils eine Ausgangskonstante mit der Ausgangswelle in Triebverbindung stehenden Vorgelegewellen angeordnet sind. Dabei umfasst jeder Gangradsatz ein drehfest auf der zugeordneten Eingangswelle angeordnetes Festrad und ein auf der betreffenden Vorgelegewelle angeordnetes Losrad. Bei diesem Schaltgetriebe sind mehrere mit Gangradsätzen belegte Radialebenen dadurch eingespart, dass pro Eingangswelle zumindest die zwei getriebeinneren Gangradsätze mit auf unterschiedlichen Vorgelegewellen angeordneten Losrädern unter Nutzung eines gemeinsamen Festrades in einer gemeinsamen Radialebene angeordnet sind. Mindestens eine weitere mit einem oder zwei Gangradsätzen belegte Radialebene ist bei diesem Schaltgetriebe dadurch eingespart, dass mindestens zwei auf einer der beiden Vorgelegewellen angeordnete Losräder von zwei unterschiedlichen Eingangswellen zugeordneten getriebeinneren Gangradsätzen über ein Windungs-Schaltelement miteinander koppelbar sind. Dadurch sind mindestens zwei Gangstufen als Windungsgänge, d.h. ohne speziell zugeordnete Gangradsätze schaltbar. Eine weitere mit einer Ausgangskonstante belegte Radialebene ist dadurch eingespart, dass die beiden Ausgangskonstanten unter Nutzung eines gemeinsamen, auf der Ausgangswelle angeordneten Abtriebsrades in einer gemeinsamen Radialebene angeordnet sind.

Somit ergibt sich gegenüber einem vergleichbaren, z.B. aus der nicht vorveröffentlichten DE 10 2010 030 569 A1 bekannten Hybridantrieb eine deutlich geringere axiale Baulänge des Hybridantriebs gemäß der Erfindung. Dieser Hybridantrieb ist daher besonders für eine Front-Quer-Anordnung in einem Kraftfahrzeug geeignet. Das betreffende Schaltgetriebe ist mit geringen Änderungen beispielsweise aus einem in zwei Ausführungsformen aus der DE 10 2007 049 271 A1 bekannten Doppelkupplungsgetriebe ableitbar und daher kostengünstig herstellbar.

Um die der einen Eingangswelle zugeordneten Gangradsätze des verbrennungsmotorischen Kraftübertragungszweiges auch für den Elektrofahrbetrieb sowie die der anderen Eingangswelle zugeordneten Gangradsätze des elektromotorischen Kraftübertragungszweiges auch für den Verbrennungsfahrbetrieb verfügbar zu machen, ist ein Koppel-Schaltelement zur Kopplung der beiden Eingangswellen vorgesehen. Die jeweilige Anordnung dieses Koppel-Schaltelementes richtet sich nach der Ausbildung und Anordnung der beiden Eingangswellen sowie nach der Anbindung des Verbrennungsmotors und der Elektromaschine an die jeweilige Eingangswelle, was nachfolgend näher erläutert wird.

Gemäß Anspruch 1, kann die eine Eingangswelle zentral angeordnet sein und axial einseitig aus einer Gehäusestirnwand des Schaltgetriebes herausragen, und die andere Eingangswelle kann als eine Hohlwelle ausgebildet und koaxial über der einen Eingangswelle angeordnet sein sowie axial gleichseitig aus der Gehäusestirnwand herausragen. Dann ist bevorzugt der Verbrennungsmotor an dem getriebeäußeren Ende der zentralen Eingangswelle und die Elektromaschine axial gleichseitig an dem getriebeäußeren Ende der als Hohlwelle ausgebildeten Eingangswelle angeordnet.

In diesem Fall kann das Koppel-Schaltelement entweder innerhalb des Schaltgetriebes zwischen dem getriebeinneren Ende der als Hohlwelle ausgebildeten Eingangswelle und der zentralen Eingangswelle oder außerhalb des Schaltgetriebes zwischen dem getriebeäußeren Ende der als Hohlwelle ausgebildeten Eingangswelle und der zentralen Eingangswelle angeordnet sein.

Gemäß Anspruch 5 ist es jedoch auch möglich, dass die beiden Eingangswellen axial benachbart zueinander angeordnet und axial gegenüberliegend jeweils aus einer Gehäusestirnwand des Schaltgetriebes herausragen. Dann ist bevorzugt der Verbrennungsmotor an dem getriebeäußeren Ende der einen Eingangswelle und die Elektromaschine axial gegenüberliegend an dem getriebeäußeren Ende der anderen Eingangswelle angeordnet.

In diesem Fall ist das Koppel-Schaltelement zweckmäßig innerhalb des Schaltgetriebes zwischen den getriebeinneren Enden der beiden Eingangswellen angeordnet.

Die eine Eingangswelle des Getriebes dieses Hybridantriebs kann zudem über eine ein- und ausrückbare Reibungskupplung mit der Triebwelle des Verbrennungsmotors verbindbar sein, wodurch ein Anfahren mit schlupfender Reibungskupplung im Verbrennungsfahrbetrieb, d.h. mit dem Verbrennungsmotor, möglich ist.

Im Gegensatz dazu kann die eine Eingangswelle jedoch auch unmittelbar bzw. über einen Drehschwingungsdämpfer drehfest mit der Triebwelle des Verbrennungsmotors verbunden sein. In diesem Fall ist ein Anfahren jedoch nur im Elektrofahrmodus, d.h. mit der Elektromaschine und mit einem Gangradsatz des elektromotorischen Kraftübertragungszweiges möglich. Da die Drehrichtung der Elektromaschine umkehrbar ist, kann dann in dem Schaltgetriebe auf einen gegebenenfalls vorhandenen Umkehr-Gangradsatz verzichtet werden oder dieser durch einen weiteren normalen Gangradsatz ersetzt werden.

Die andere Eingangswelle kann unmittelbar drehfest mit dem Rotor der Elektromaschine verbunden sein oder über eine Getriebestufe, die vorzugsweise eine Underdrive-Übersetzung aufweist, mit dem Rotor der Elektromaschine in Triebverbindung stehen.

Um bei dem Schaltgetriebe eine höhere Variabilität in der Gestaltung der Übersetzungen der Gangradsätze zu erreichen, kann vorgesehen sein, dass zumindest ein gemeinsames Festrad von zwei in einer gemeinsamen Radialebene angeordneten Gangradsätzen als ein Stufenrad ausgebildet ist. Hierdurch wird zudem eine geringere Profilverschiebung in den Verzahnungseingriffen der beiden zugeordneten Losräder bewirkt, was zu einem geringeren Verschleiß der Zahnräder und zu einer höheren Laufruhe des Schaltgetriebes führt.

Zur Verbesserung der Betriebseigenschaften der Hybridantriebs, bei einer Anbindung des Verbrennungsmotors über eine Reibungskupplung insbesondere zur Ermöglichung von Lastschaltungen im Elektrofahrbetrieb, kann die eine Eingangswelle zusätzlich mit dem Rotor einer zweiten Elektromaschine in Triebverbindung stehen, die an dem getriebeäußeren Ende dieser Eingangswelle angeordnet und vorzugsweise als ein Starter-Generator ausgebildet ist.

Zur Verdeutlichung der Erfindung ist der Beschreibung eine Zeichnung mit Ausführungsbeispielen beigefügt. In dieser zeigt
- Fig. 1: einen ersten Hybridantrieb eines Kraftfahrzeugs mit einem aus dem Doppelkupplungsgetriebe gemäß Fig. 21 abgeleiteten Schaltgetriebe,
- Fig. 1a: ein Betriebs- und Schaltschema des ersten Hybridantriebs gemäß Fig. 1 für einen Verbrennungsfahrbetrieb in Form einer Tabelle,
- Fig. 2: eine erste Abwandlung des ersten Hybridantriebs gemäß Fig. 1,
- Fig. 3: eine zweite Abwandlung des ersten Hybridantriebs gemäß Fig. 1,
- Fig. 4: einen zweiten Hybridantrieb eines Kraftfahrzeugs mit einem aus dem Doppelkupplungsgetriebe gemäß Fig. 21 abgeleiteten Schaltgetriebe,
- Fig. 4a: ein Betriebs- und Schaltschema des zweiten Hybridantriebs nach Fig. 4 für einen Verbrennungsfahrbetrieb in Form einer Tabelle,
- Fig. 5: eine erste Abwandlung des zweiten Hybridantriebs gemäß Fig. 4,
- Fig. 6: eine zweite Abwandlung des zweiten Hybridantriebs gemäß Fig. 4,
- Fig. 7: einen dritten Hybridantrieb eines Kraftfahrzeugs mit einem aus dem Doppelkupplungsgetriebe gemäß Fig. 21 abgeleiteten Schaltgetriebe,
- Fig. 7a: ein Betriebs- und Schaltschema des dritten Hybridantriebs gemäß Fig. 7 für einen Verbrennungsfahrbetrieb in Form einer Tabelle,
- Fig. 8: eine Abwandlung des dritten Hybridantriebs gemäß Fig. 7,
- Fig. 9: einen vierten Hybridantrieb eines Kraftfahrzeugs mit einem aus dem Doppelkupplungsgetriebe gemäß Fig. 21 abgeleiteten Schaltgetriebe,
- Fig. 9a: ein Betriebs- und Schaltschema des vierten Hybridantriebs gemäß Fig. 9 für einen Verbrennungsfahrbetrieb in Form einer Tabelle,
- Fig. 10: eine Abwandlung des vierten Hybridantriebs gemäß Fig. 9,
- Fig. 11: einen fünften Hybridantrieb eines Kraftfahrzeugs mit einem aus dem Doppelkupplungsgetriebe gemäß Fig. 21 abgeleiteten Schaltgetriebe,
- Fig. 11a: ein Betriebs- und Schaltschema des fünften Hybridantriebs gemäß Fig. 11 für einen Verbrennungsfahrbetrieb in Form einer Tabelle,
- Fig. 12: eine erste Abwandlung des fünften Hybridantriebs gemäß Fig. 11,
- Fig. 13: eine zweite Abwandlung des fünften Hybridantriebs gemäß Fig. 11,
- Fig. 14: einen sechsten Hybridantrieb eines Kraftfahrzeugs mit einem aus dem Doppelkupplungsgetriebe gemäß Fig. 21 abgeleiteten Schaltgetriebe,
- Fig. 14a: ein Betriebs- und Schaltschema des sechsten Hybridantriebs gemäß Fig. 14 für einen Verbrennungsfahrbetrieb in Form einer Tabelle,
- Fig. 15: eine erste Abwandlung des sechsten Hybridantriebs gemäß Fig. 14,
- Fig. 16: eine zweite Abwandlung des sechsten Hybridantriebs gemäß Fig. 14,
- Fig. 17: einen siebten Hybridantrieb eines Kraftfahrzeugs mit einem aus dem Doppelkupplungsgetriebe gemäß Fig. 21 abgeleiteten Schaltgetriebe,
- Fig. 17a: ein Betriebs- und Schaltschema des siebten Hybridantriebs gemäß Fig. 17 für einen Verbrennungsfahrbetrieb in Form einer Tabelle,
- Fig. 18: eine Abwandlung des siebten Hybridantriebs gemäß Fig. 17,
- Fig. 19: einen achten Hybridantrieb eines Kraftfahrzeugs mit einem aus dem Doppelkupplungsgetriebe gemäß Fig. 21 abgeleiteten Schaltgetriebe,
- Fig. 19a: ein Betriebs- und Schaltschema des achten Hybridantriebs gemäß Fig. 19 für einen Verbrennungsfahrbetrieb in Form einer Tabelle,
- Fig. 20: eine Abwandlung des achten Hybridantriebs gemäß Fig. 19,
- Fig. 21: ein Doppelkupplungsgetriebe mit zwei Eingangswellen, zwei Vorgelegewellen, und einer gemeinsamen Ausgangswelle, und
- Fig. 21a: ein Betriebs- und Schaltschema des Doppelkupplungsgetriebes gemäß Fig. 21 in Form einer Tabelle.

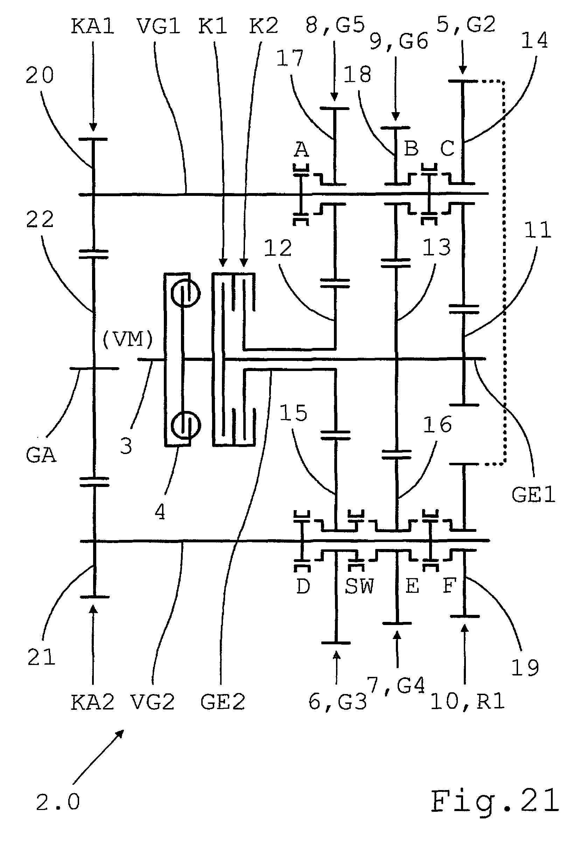

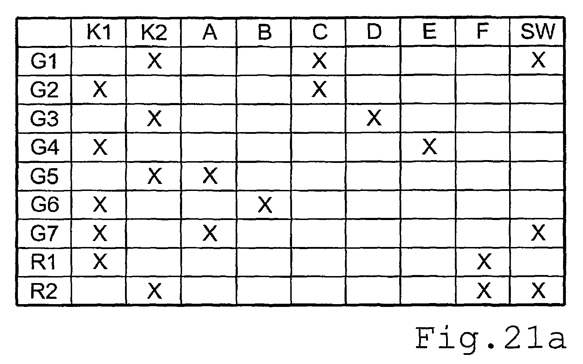

In Fig. 21 ist in schematischer Form ein z.B. aus der DE 10 2007 049 271 A1 bekanntes Doppelkupplungsgetriebe 2.0 abgebildet, aus dem die nachfolgend beschriebenen Schaltgetriebe 2.1 bis 2.20 der erfindungsgemäßen Hybridantriebe 1.1 bis 1.8a abgeleitet sind.

Das Doppelkupplungsgetriebe 2.0 weist zwei koaxiale Eingangswellen GE1, GE2, zwei Vorgelegewellen VG1, VG2 und eine gemeinsame Ausgangswelle GA auf. Die erste Eingangswelle GE1 ist zentral innerhalb der als Hohlwelle ausgebildeten zweiten Eingangswelle GE2 angeordnet. Beide Eingangswellen GE1, GE2 sind eingangsseitig über jeweils eine zugeordnete Reibungskupplung K1, K2 mit der mit einem Drehschwingungsdämpfer 4 versehenen Triebwelle 3 eines nicht näher dargestellten Verbrennungsmotors VM verbindbar. Ausgangsseitig sind beide Eingangswellen GE1, GE2 jeweils über mehrere selektiv schaltbare Gangradsätze 5, 7, 9, 10 bzw. 6, 8 mit jeweils einer der beiden Vorgelegewellen VG1, VG2 in Triebverbindung bringbar. Beide Vorgelegewellen VG1, VG2 stehen über jeweils eine Ausgangskonstante KA1, KA2 mit der Ausgangswelle GA in Triebverbindung.

Die Gangradsätze 5, 7, 9, 10 bzw. 6, 8 umfassen jeweils ein drehfest auf der zugeordneten Eingangswelle GE1, GE2 angeordnetes Festrad 11, 13 bzw. 12 und ein auf der betreffenden Vorgelegewelle VG1, VG2 drehbar angeordnetes und über eine zugeordnete Gangkupplung A, B, C, D, E, F mit dieser koppelbares Losrad 14, 16, 18, 19 bzw. 15, 17, wobei die Gangradsätze 5, 7, 9, 10 bzw. 6, 8 jeweils paarweise unter Nutzung eines gemeinsamen Festrades 11, 13 bzw. 12 in einer gemeinsamen Radialebene angeordnet sind.

Die Ausgangskonstanten KA1, KA2 umfassen jeweils ein drehfest auf der zugeordneten Vorgelegewelle VG1, VG2 angeordnetes Festrad 20, 21 und ein drehfest auf der Ausgangswelle GA angeordnetes Abtriebsrad 22, wobei die Ausgangskonstanten KA1, KA2 unter Nutzung des gemeinsamen Abtriebsrades 22 in einer gemeinsamen Radialebene angeordnet sind.

Zwischen den auf der zweiten Vorgelegewelle VG2 angeordneten Losrädern 15 und 16 der beiden Gangradsätze 6 und 7 ist ein so genanntes Windungs-Schaltelement SW angeordnet, mittels dem diese koppelbar sind.

In Fig. 21 sind die beiden Vorgelegewellen VG1, VG2 um die Mittelachse der beiden Eingangswellen GE1, GE2 in die Zeichenebene aufgefaltet. Tatsächlich bilden die beiden Vorgelegewellen VG1, VG2 zusammen mit den beiden Eingangswellen GE1, GE2 in der Axialansicht eine V-förmige Anordnung. Demzufolge ist auch die Ausgangswelle GA im Gegensatz zur Darstellung in Fig. 21 tatsächlich radial beabstandet von dem Verbrennungsmotor VM angeordnet.

Vorliegend bilden die der ersten Eingangswelle GE1 zugeordneten Gangradsätze 5, 7, 9, 10 die geraden Vorwärtsgänge G2, G4, G6 und den Rückwärtsgang R1. Dabei nutzt der Gangradsatz 10 des Rückwärtsgangs R1 durch einen Verzahnungseingriff des zugeordneten Losrades 19 mit dem Losrad 14 des dem zweiten Vorwärtsgangs G2 zugeordneten Gangradsatzes 5 anstelle eines separaten Zwischenrades das betreffende Losrad 14 zur Drehrichtungsumkehr. Die ungeraden Vorwärtsgänge G3, G5 werden durch die der zweiten Eingangswelle GE2 zugeordneten Gangradsätze 6 und 8 gebildet.

Durch Einrücken des Windungs-Schaltelementes SW sind zwei weitere (ungerade) Vorwärtsgänge G1 und G7 sowie ein weiterer Rückwärtsgang R2 als Windungsgänge schaltbar. Bei eingerücktem Windungs-Schaltelement SW erfolgt der Kraftfluss bei durch Einrücken der Gangkupplung C eingelegtem Vorwärtsgang G1 von der zweiten Eingangswelle GE2 über die Gangradsätze 6, 7, 5 in die erste Vorgelegewelle VG1. Bei eingerücktem Windungs-Schaltelement SW erfolgt der Kraftfluss bei durch Einrücken der Gangkupplung A eingelegtem Vorwärtsgang G7 von der ersten Eingangswelle GE1 über die Gangradsätze 7, 6, 8 in die erste Vorgelegewelle VG1. Bei eingerücktem Windungs-Schaltelement SW erfolgt der Kraftfluss bei durch Einrücken der Gangkupplung F eingelegtem Rückwärtsgang R2 von der zweiten Eingangswelle GE2 über die Gangradsätze 6, 7, 5, 10 in die zweite Vorgelegewelle VG2.

Die somit insgesamt verfügbaren sieben Vorwärtsgänge und zwei Rückwärtsgänge sind in Fig. 21 a in einem tabellarischen Betriebs- und Schaltschema zusammengestellt. In der Tabelle von Fig. 21 a ist der zur Schaltung der Gänge G1 - G7, R1, R2 eingerückte bzw. geschlossene Zustand der Reibungskupplungen K1, K2, der Gangkupplungen A, B, C, D, E, F und des Windungs-Schaltelementes SW jeweils mit einem Kreuz markiert.

Ein dem Bauprinzip der Erfindung folgender erster Hybridantrieb 1.1 gemäß Fig. 1, der ein aus dem Doppelkupplungsgetriebe 2.0 nach Fig. 21 abgeleitetes Schaltgetriebe 2.1 umfasst, ist Aufwand sparend dadurch geschaffen, dass nur die zentral angeordnete erste Eingangswelle GE1 an ihrem getriebeäußeren Ende 23 über eine ein- und ausrückbare Reibungskupplung K1 mit der Triebwelle 3 des Verbrennungsmotors VM verbindbar ist. Die als Hohlwelle ausgebildete und koaxial über der ersten Eingangswelle GE1 angeordnete zweite Eingangswelle GE2 ist dagegen an ihrem getriebeäußeren Ende 24 unmittelbar mit dem Rotor 25 einer als Motor und als Generator betreibbaren Elektromaschine EM verbunden ist.

Da beide Eingangswellen GE1, GE2 vorliegend wie bei dem Doppelkupplungsgetriebe 2.0 nach Fig. 21 axial gleichseitig aus einer Gehäusestirnwand 26 des Schaltgetriebes 2.1 herausragen, ist die Elektromaschine EM axial benachbart zu dem Verbrennungsmotor VM in etwa anstelle der zweiten Reibungskupplung K2 des Doppelkupplungsgetriebes 2.0 angeordnet. Zur Kopplung der beiden Eingangswellen GE1, GE2 ist zusätzlich ein so genanntes Koppel-Schaltelement SK vorgesehen, das vorliegend innerhalb des Schaltgetriebes 2.1 zwischen dem getriebeinneren Ende 29 der als Hohlwelle ausgebildeten zweiten Eingangswelle GE2 und der zentralen ersten Eingangswelle GE1 angeordnet ist.

Die für einen Verbrennungsfahrbetrieb verfügbaren Gänge G2 - G7, R1 sind in Fig. 1 a in einem tabellarischen Betriebs- und Schaltschema zusammengestellt, in dem der zur Schaltung dieser Gänge G2 - G7, R1 eingerückte bzw. geschlossene Zustand der Reibungskupplung K1, der Gangkupplungen A - F, des Windungs-Schaltelementes SW und des Koppel-Schaltelementes SK jeweils mit einem Kreuz markiert ist. Demnach stehen dem Hybridantrieb 1.1 im Verbrennungsfahrbetrieb im Vergleich zu dem Doppelkupplungsgetriebe 2.0 nach Fig. 21 bis auf den ersten Vorwärtsgang G1 und den zweiten Rückwärtsgang R2 alle Gänge G2 - G7, R1 zur Verfügung.

Im Elektrofahrbetrieb des Hybridantriebs 1.1 stehen dagegen bei geöffneter Reibungskupplung K1 bis auf den siebten Vorwärtsgang G7 alle anderen Gänge G1 - G6, R1, R2 zur Verfügung, wobei der getriebeseitige Teil der Reibungskupplung K1 bei ausgerücktem Koppel-Schaltelement SK im dritten und fünften Gang G3, G5 nicht mitdreht.

Im Hybridfahrbetrieb kann die Elektromaschine EM bei ausgerücktem Koppel-Schaltelement SK im dritten oder fünften Vorwärtsgang G3, G5 zur Unterstützung des Verbrennungsmotors VM als Motor oder zur Ladung eines elektrischen Energiespeichers als Generator betrieben werden. Bei eingerücktem Koppel-Schaltelement SK kann dies mit Ausnahme der Windungsgänge G1, G7, R2 (SW ausgerückt) über einen beliebigen Gang G2 - G6, R1 erfolgen. Eine weitere Kopplung der beiden Eingangswellen GE1, GE2 kann durch das Einrücken des Windungs-Schaltelementes SW hergestellt werden (SK ausgerückt), was vorteilhaft zu einer gegenüber dem Verbrennungsmotor VM höheren Drehzahl der Elektromaschine EM im generatorischen Betrieb führt.

Bei einem in Fig. 2 abgebildeten Hybridantriebsstrang 1.1 a, der eine erste Abwandlung des ersten Hybridantriebsstrangs 1.1 nach Fig. 1 darstellt und dieselben Funktionsmöglichkeiten aufweist, ist im Unterschied dazu lediglich das Koppel-Schaltelement SK nunmehr außerhalb des Schaltgetriebes 2.2 zwischen dem getriebeäußeren Ende 24 der als Hohlwelle ausgebildeten zweiten Eingangswelle GE2 und der zentralen ersten Eingangswelle GE1 angeordnet.

Ein in Fig. 3 abgebildeter Hybridantriebsstrang 1.1 b, der eine zweite Abwandlung des ersten Hybridantriebsstrangs 1.1 nach Fig. 1 darstellt und zu diesem funktionsgleich ist, weist dagegen gegenüber den beiden vorbeschriebenen Hybridantriebssträngen 1.1 und 1.1a gemäß den Figuren 1 und 2 größere Unterschiede auf. So sind nunmehr die Gangradsätze 5 bis 10 gegenüber der Anordnung in dem Schaltgetriebe 2.1 von Fig. 1 axial gespiegelt angeordnet, und die zweite Eingangswelle GE2 ist axial benachbart zu der ersten Eingangswelle GE1 angeordnet und ragt axial gegenüberliegend aus einer Gehäusestirnwand 27 des Schaltgetriebes 2.3 heraus. Demzufolge ist die Elektromaschine EM nunmehr auf der dem Verbrennungsmotor VM axial gegenüberliegenden Seite des Schaltgetriebes 2.3 angeordnet, und die zweite Eingangswelle GE2 ist an ihrem getriebeäußeren Ende 24 unmittelbar mit dem Rotor 25 der Elektromaschine EM verbunden. Das Koppel-Schaltelement SK ist nun innerhalb des Schaltgetriebes 2.3 zwischen den getriebeinneren Enden 28, 29 der beiden Eingangswellen GE1, GE2 angeordnet.

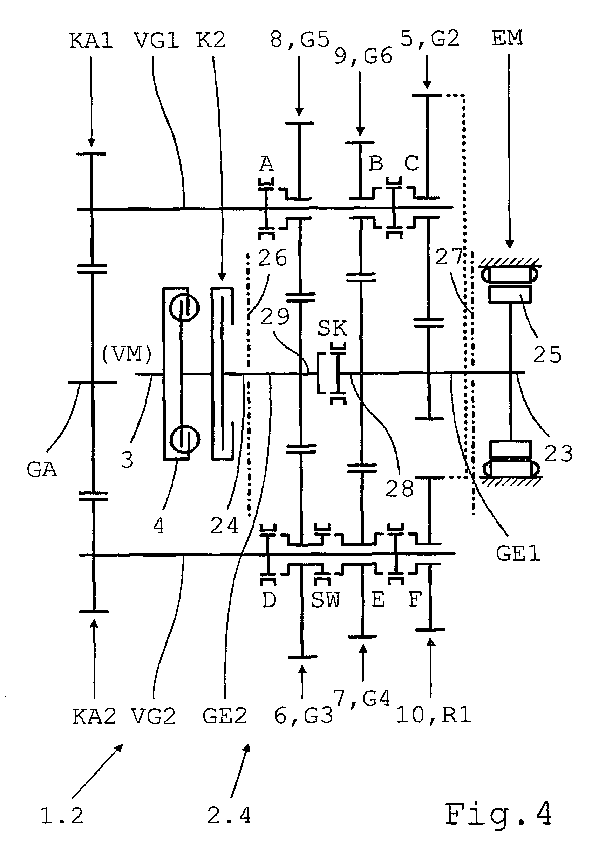

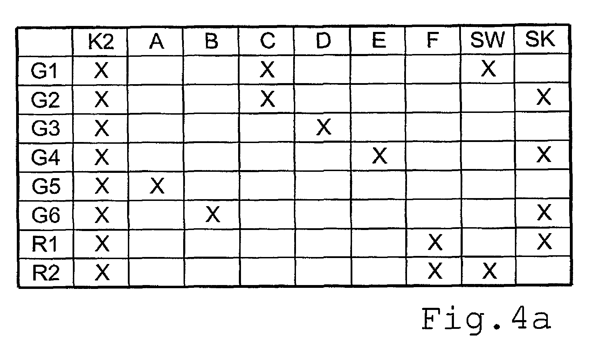

Ein zweiter dem Konstruktionsprinzip der Erfindung entsprechender Hybridantrieb 1.2 nach Fig. 4, der ein aus dem Doppelkupplungsgetriebe 2.0 nach Fig. 21 abgeleitetes Schaltgetriebe 2.4 umfasst, ist auf dadurch geschaffen, dass nur die zweite Eingangswelle GE2 an ihrem getriebeäußeren Ende 24 über eine ein- und ausrückbare Reibungskupplung K2 mit der Triebwelle 3 des Verbrennungsmotors VM verbindbar ist, und dass die erste Eingangswelle GE1 nunmehr axial benachbart zu der zweiten Eingangswelle GE2 angeordnet ist, axial gegenüberliegend aus der betreffenden Gehäusestirnwand 27 des Schaltgetriebes 2.4 herausragt, und an ihrem getriebeäußeren Ende 23 unmittelbar mit dem Rotor 25 der Elektromaschine EM verbunden ist. Zur Kopplung der beiden Eingangswellen GE1, GE2 ist wiederum ein Koppel-Schaltelement SK vorgesehen, das vorliegend innerhalb des Schaltgetriebes 2.4 zwischen den getriebeinneren Enden 28, 29 der beiden Eingangswellen GE1, GE2 angeordnet ist.

Die für einen Verbrennungsfahrbetrieb verfügbaren Gänge G1 - G6, R1, R2 sind in Fig. 4a in einem tabellarischen Betriebs- und Schaltschema zusammengestellt, in dem der zur Schaltung der Gänge G1 - G6, R1, R2 eingerückte bzw. geschlossene Zustand der Reibungskupplung K2, der Gangkupplungen A bis F, des Windungs-Schaltelementes SW und des Koppel-Schaltelementes SK jeweils mit einem Kreuz markiert ist.

Demnach stehen dem Hybridantrieb 1.2 im Verbrennungsfahrbetrieb im Vergleich zu dem Doppelkupplungsgetriebe 2.0 nach Fig. 21 bis auf den siebten Vorwärtsgang G7 alle anderen Gänge G1 - G6, R1, R2 zur Verfügung. Im Elektrofahrbetrieb des Hybridantriebs 1.2 sind dagegen bei geöffneter Reibungskupplung K2 bis auf den ersten Vorwärtsgang G1 und den zweiten Rückwärtsgang R2 alle Gänge G2 - G7, R1 verfügbar, wobei der getriebeseitige Teil der Reibungskupplung K2 bei ausgerücktem Koppel-Schaltelement SK und in einem der Gänge G2, G4, G6 und R1 nicht mitdreht. Im Hybridfahrbetrieb kann die Elektromaschine EM bei ausgerücktem Koppel-Schaltelement SK in einem der Gänge G2, G4, G6 und R1 zur Unterstützung des Verbrennungsmotors VM als Motor oder zur Ladung eines elektrischen Energiespeichers als Generator betrieben werden. Bei eingerücktem Koppel-Schaltelement SK kann dies auch über den dritten oder fünften Vorwärtsgang G3, G5 erfolgen. Eine weitere Kopplung der beiden Eingangswellen GE1, GE2 kann hierzu durch das Einrücken des Windungs-Schaltelementes SW hergestellt werden (SK ausgerückt), was aber nachteilig mit einer gegenüber dem Verbrennungsmotor VM niedrigeren Drehzahl der Elektromaschine EM verbunden ist.

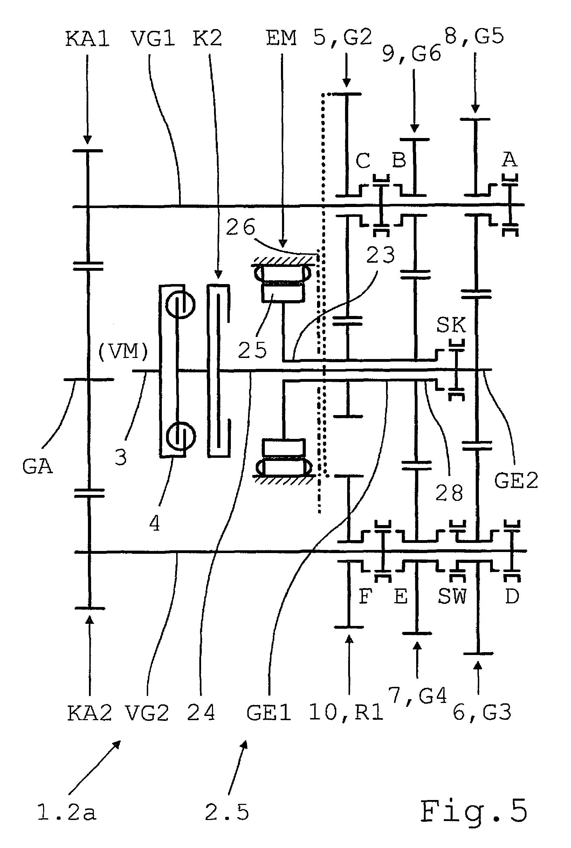

Bei einem in Fig. 5 abgebildeten Hybridantriebsstrang 1.2a, der eine erste Abwandlung des zweiten Hybridantriebsstrangs 1.2 nach Fig. 4 darstellt und dieselben Funktionsmöglichkeiten aufweist, sind die Gangradsätze 5 bis 10 gegenüber der Anordnung in Fig. 4 axial gespiegelt angeordnet, und die erste Eingangswelle GE1 ist als eine Hohlwelle ausgebildet sowie koaxial über der zweiten Eingangswelle GE2 angeordnet, und ragt axial gleichseitig wie die zweite Eingangswelle GE2 aus der Gehäusestirnwand 26 des Schaltgetriebes 2.5 heraus. Demzufolge ist die Elektromaschine EM nunmehr axial auf derselben Seite des Schaltgetriebes 2.5 wie der Verbrennungsmotor VM angeordnet, und die erste Eingangswelle GE1 ist an ihrem getriebeäußeren Ende 23 unmittelbar mit dem Rotor 25 der Elektromaschine EM verbunden. Das Koppel-Schaltelement SK ist wiederum innerhalb des Schaltgetriebes 2.5 zwischen dem getriebeinneren Ende 28 der als Hohlwelle ausgebildeten ersten Eingangswelle GE1 und der zentralen zweiten Eingangswelle GE2 angeordnet.

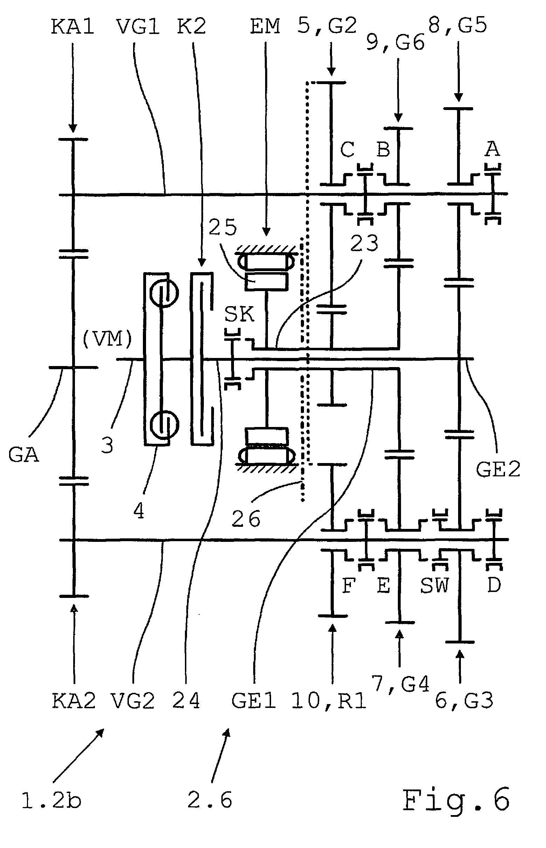

Ein in Fig. 6 abgebildeter Hybridantriebsstrang 1.2b, der eine zweite Abwandlung des zweiten Hybridantriebsstrangs 1.2 nach Fig. 4 darstellt und zu diesem funktionsgleich ist, unterscheidet sich von dem zuvor beschriebenen Hybridantriebsstrang 1.2a nach Fig. 5 nur dadurch, dass das Koppel-Schaltelement SK nunmehr außerhalb des Schaltgetriebes 2.6 zwischen dem getriebeäußeren Ende 23 der als Hohlwelle ausgebildeten ersten Eingangswelle GE1 und der zentralen zweiten Eingangswelle GE2 angeordnet ist.

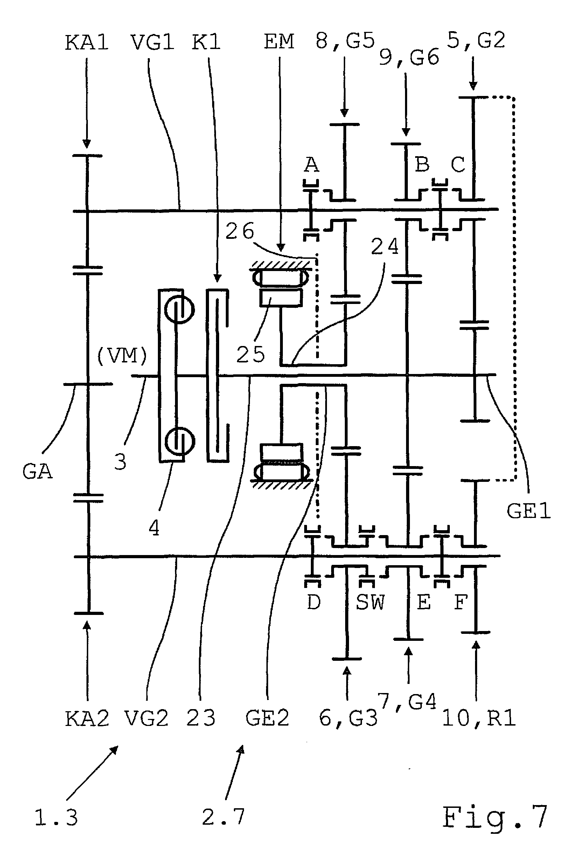

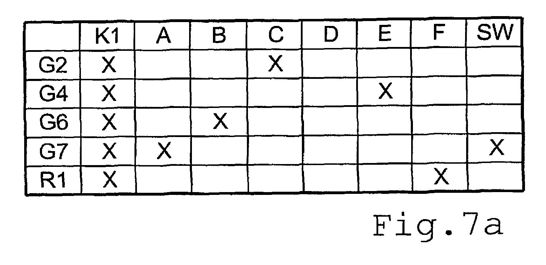

Ein erfindungsgemäßer dritter Hybridantrieb 1.3 nach Fig. 7, der ein aus dem Doppelkupplungsgetriebe 2.0 nach Fig. 21 abgeleitetes Schaltgetriebe 2.7 umfasst, ist weitgehend baugleich zu dem ersten Hybridantrieb 1.1 nach Fig. 1 und unterscheidet sich von diesem nur dadurch, dass auf ein Koppel-Schaltelement SK zur Kopplung der beiden Eingangswellen GE1, GE2 verzichtet ist. Demzufolge sind für einen Verbrennungsfahrbetrieb nur die der ersten Eingangswelle GE1 zugeordneten Gänge G2, G4, G6, R1 und der an die erste Eingangswelle GE1 angebundene, als Windungsgang wirksame siebte Vorwärtsgang G7 verfügbar.

Die entsprechenden Gänge G2, G4, G6, G7, R1 sind in Fig. 7a in einem tabellarischen Betriebs- und Schaltschema zusammengestellt, in dem der zur Schaltung der Gänge G2, G4, G6, G7, R1 eingerückte bzw. geschlossene Zustand der Reibungskupplung K1, der Gangkupplungen A bis F, und des Windungs-Schaltelementes SW jeweils mit einem Kreuz markiert ist.

Im Elektrofahrbetrieb des Hybridantriebs 1.3 sind bei geöffneter Reibungskupplung K1 die der zweiten Eingangswelle GE2 zugeordneten Gänge G3 und G5 sowie die an die zweite Eingangswelle GE2 angebundenen, als Windungsgänge wirksamen Gänge G1 und R2 verfügbar, wobei der getriebeseitige Teil der Reibungskupplung K1 bei eingelegtem dritten oder fünften Vorwärtsgang G3, G5 nicht mitdreht.

Im Hybridfahrbetrieb kann die Elektromaschine EM bei eingelegtem dritten oder fünften Vorwärtsgang G3, G5 zur Unterstützung des Verbrennungsmotors VM als Motor oder zur Ladung eines elektrischen Energiespeichers als Generator betrieben werden. Eine Kopplung der beiden Eingangswellen GE1, GE2 kann hierzu auch durch das Einrücken des Windungs-Schaltelementes SW hergestellt werden, was vorteilhaft zu einer gegenüber dem Verbrennungsmotor VM höheren Drehzahl der Elektromaschine EM führt.

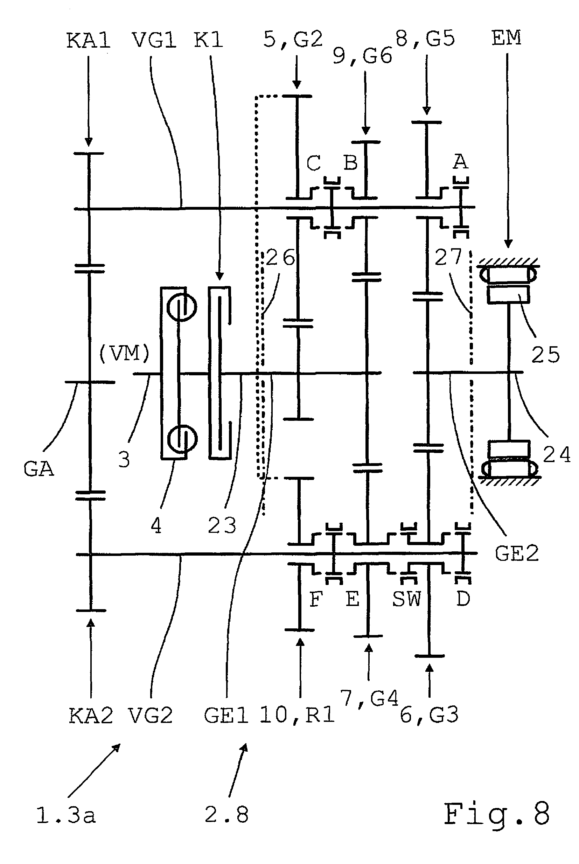

Bei einem in Fig. 8 abgebildeten Hybridantriebsstrang 1.3a, der eine Abwandlung des dritten Hybridantriebsstrangs 1.3 nach Fig. 7 darstellt und zu diesem funktionsgleich ist, sind die Gangradsätze 5 bis 10 gegenüber der Anordnung in dem Schaltgetriebe 2.7 von Fig. 7 axial gespiegelt angeordnet, und die zweite Eingangswelle GE2 ist axial benachbart zu der ersten Eingangswelle GE1 angeordnet und ragt axial gegenüberliegend aus der betreffenden Gehäusestirnwand 27 des Schaltgetriebes 2.8 heraus. Demzufolge ist die Elektromaschine EM nunmehr auf der dem Verbrennungsmotor VM axial gegenüberliegenden Seite des Schaltgetriebes 2.8 angeordnet, und die zweite Eingangswelle GE2 ist an ihrem getriebeäußeren Ende 24 unmittelbar mit dem Rotor 25 der Elektromaschine EM verbunden.

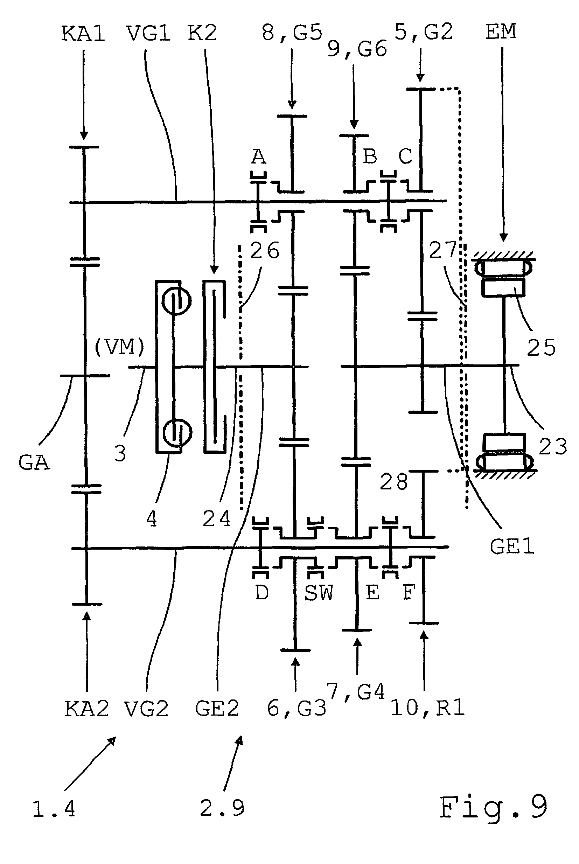

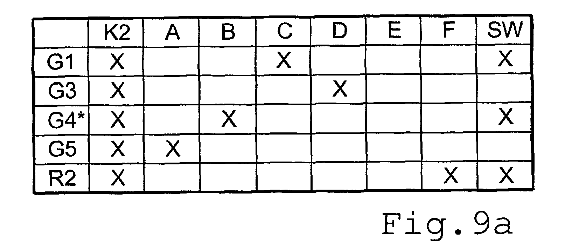

Ein erfindungsgemäßer vierter Hybridantrieb 1.4 nach Fig. 9, der ein aus dem Doppelkupplungsgetriebe 2.0 nach Fig. 21 abgeleitetes Schaltgetriebe 2.9 umfasst, ist weitgehend baugleich zu dem zweiten Hybridantrieb 1.2 nach Fig. 4 und unterscheidet sich von diesem nur dadurch, dass auf ein Koppel-Schaltelement SK zur Kopplung der beiden Eingangswellen GE1, GE2 verzichtet wurde. Demzufolge sind für einen Verbrennungsfahrbetrieb nur die der zweiten Eingangswelle GE2 zugeordneten Gänge G3, G5 und die an die zweite Eingangswelle GE2 angebundenen, als Windungsgänge wirksamen Gänge G1, R2 verfügbar. Durch das gleichzeitige Einrücken der Gangkupplung B und des Windungs-Schaltelementes SW kann jedoch ein weiterer Vorwärtsgang G4* als Windungsgang geschaltet werden, der bislang nicht genutzt wurde, und dessen Übersetzung in etwa derjenigen des vierten Gangs G4 entspricht.

Die entsprechenden Gänge G1, G3, G4*, G5, R2 sind in Fig. 9a in einem tabellarischen Betriebs- und Schaltschema zusammengestellt, in dem der zur Schaltung der Gänge G1, G3, G4*, G5, R2 eingerückte bzw. geschlossene Zustand der Reibungskupplung K2, der Gangkupplungen A bis F und des Windungs-Schaltelementes SW jeweils mit einem Kreuz markiert ist. Im Elektrofahrbetrieb des Hybridantriebs 1.4 sind bei geöffneter Reibungskupplung K2 die der ersten Eingangswelle GE1 zugeordneten Gänge G2, G4, G6 und R1 sowie der an die erste Eingangswelle GE1 angebundene, als Windungsgang wirksame siebte Vorwärtsgang G7 verfügbar, wobei der getriebeseitige Teil der Reibungskupplung K2 in einem der Gänge G2, G4, G6, R1 nicht mitdreht.

Im Hybridfahrbetrieb kann die Elektromaschine EM bei einem der eingelegten Gang G2, G4, G6, R1 zur Unterstützung des Verbrennungsmotors VM als Motor oder zur Ladung eines elektrischen Energiespeichers als Generator betrieben werden. Eine Kopplung der beiden Eingangswellen GE1, GE2 kann hierzu auch durch das Einrücken des Windungs-Schaltelementes SW hergestellt werden, was aber nachteilig mit einer gegenüber dem Verbrennungsmotor VM niedrigeren Drehzahl der Elektromaschine EM verbunden ist.

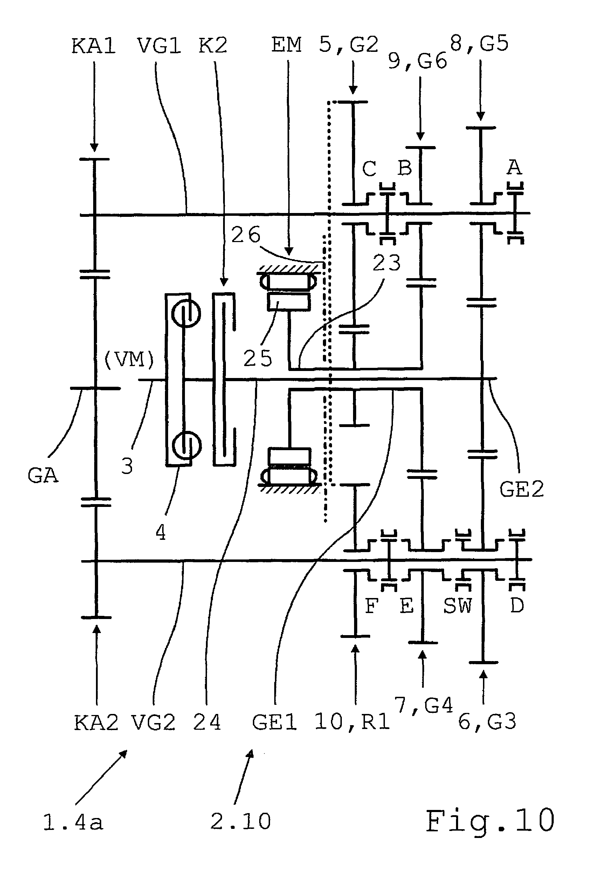

Bei einem in Fig. 10 abgebildeten Hybridantriebsstrang 1.4a, der eine Abwandlung des vierten Hybridantriebsstrangs 1.4 nach Fig. 9 darstellt und zu diesem funktionsgleich ist, sind die Gangradsätze 5 bis 10 gegenüber der Anordnung in dem Schaltgetriebe 2.9 von Fig. 9 axial gespiegelt angeordnet, und die erste Eingangswelle GE1 ist als eine Hohlwelle ausgebildet sowie koaxial über der zweiten Eingangswelle GE2 angeordnet, und ragt axial gleichseitig wie die zweite Eingangswelle GE2 aus der betreffenden Gehäusestirnwand 26 des Schaltgetriebes 2.10 heraus. Demzufolge ist die Elektromaschine EM nunmehr axial auf derselben Seite des Schaltgetriebes 2.10 wie der Verbrennungsmotor VM angeordnet, und die erste Eingangswelle GE1 ist an ihrem getriebeäußeren Ende 23 unmittelbar mit dem Rotor 25 der Elektromaschine EM verbunden.

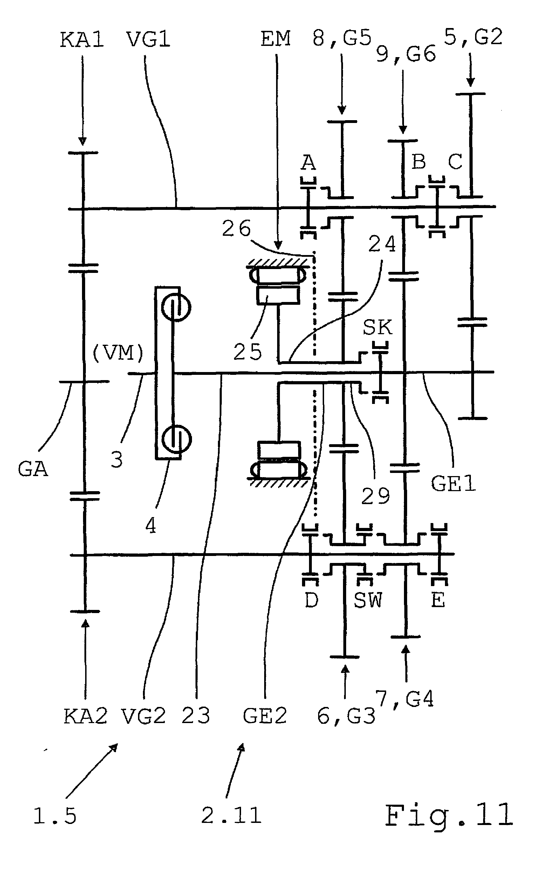

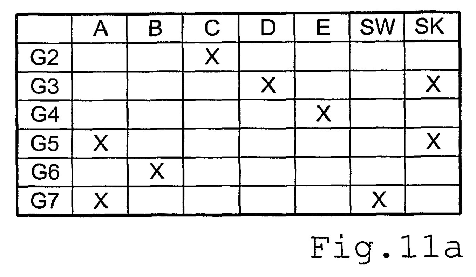

Ein erfindungsgemäßer fünfter Hybridantrieb 1.5 nach Fig. 11, der ein aus dem Doppelkupplungsgetriebe 2.0 nach Fig. 21 abgeleitetes Schaltgetriebe 2.11 aufweist, ist weitgehend baugleich zu dem ersten Hybridantrieb 1.1 nach Fig. 1 und unterscheidet sich von diesem nur dadurch, dass auf eine Reibungskupplung K1 zur Anbindung des Verbrennungsmotors VM an die erste Eingangswelle GE1 verzichtet wurde. Die erste Eingangswelle GE1 ist somit an ihrem getriebeäußeren Ende 23 (über den Drehschwingungsdämpfer 4) unmittelbar drehfest mit der Triebwelle 3 des Verbrennungsmotors VM verbunden. Demzufolge kann das Anfahren nur elektromotorisch erfolgen. Da die Drehrichtung der Elektromaschine EM umkehrbar ist, kann auf einen Umkehr-Gangradsatz verzichtet werden. Daher sind in dem Schaltgetriebe 2.11 nach Fig. 11 gegenüber dem Schaltgetriebe 2.1 nach Fig. 1 das Losrad 19 und die zugeordnete Gangkupplung F des Rückwärtsgangs R1 weggelassen.

Für einen Verbrennungsfahrbetrieb stehen bis auf den ersten Vorwärtsgang G1 alle Vorwärtsgänge G2 bis G7 zur Verfügung. Die entsprechenden Gänge G2 bis G7 sind in Fig. 11 a in einem tabellarischen Betriebs- und Schaltschema zusammengestellt, in dem der zur Schaltung der Gänge G2 bis G7 eingerückte bzw. geschlossene Zustand der Gangkupplungen A bis E, des Windungs-Schaltelementes SW und des Koppel-Schaltelementes SK jeweils mit einem Kreuz markiert ist.

Im Elektrofahrbetrieb des Hybridantriebs 1.5 gemäß Fig. 11 sind nur die der zweiten Eingangswelle GE2 zugeordneten Gänge G3 und G5 verfügbar. Im Hybridfahrbetrieb kann die Elektromaschine EM wahlweise bei eingelegtem drittem oder fünftem Vorwärtsgang G3, G5 oder bei eingerücktem Koppel-Schaltelement SK zur Unterstützung des Verbrennungsmotors VM als Motor oder zur Ladung eines elektrischen Energiespeichers als Generator betrieben werden. Eine weitere Kopplung der beiden Eingangswellen GE1, GE2 kann hierzu durch das Einrücken des WindungsSchaltelementes SW hergestellt werden (SK ausgerückt), was vorteilhaft zu einer gegenüber dem Verbrennungsmotor VM höheren Drehzahl der Elektromaschine EM führt.

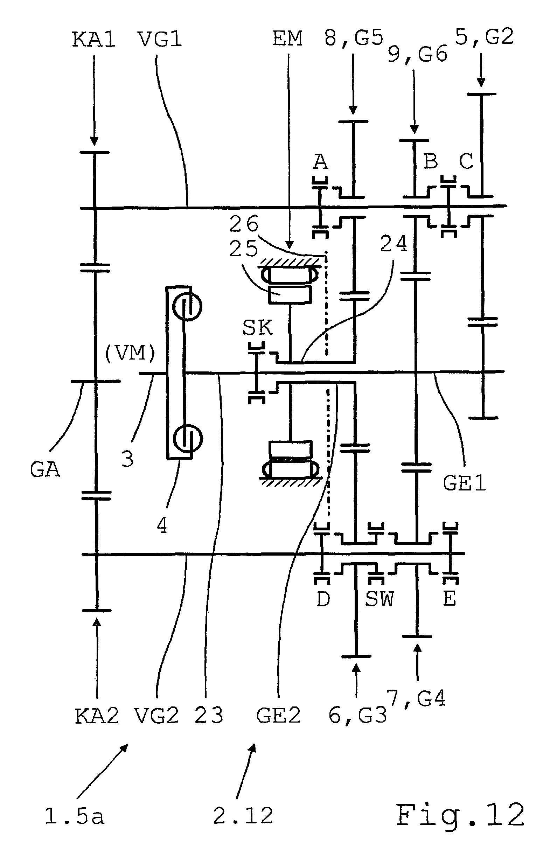

Bei dem in Fig. 12 abgebildeten Hybridantriebsstrang 1.5a, der eine erste Abwandlung des fünften Hybridantriebsstrangs 1.5 nach Fig. 11 darstellt und dieselben Funktionsmöglichkeiten aufweist, ist im Unterschied dazu lediglich das Koppel-Schaltelement SK nunmehr außerhalb des Schaltgetriebes 2.12 zwischen dem getriebeäußeren Ende 24 der als Hohlwelle ausgebildeten zweiten Eingangswelle GE2 und der zentralen ersten Eingangswelle GE1 angeordnet.

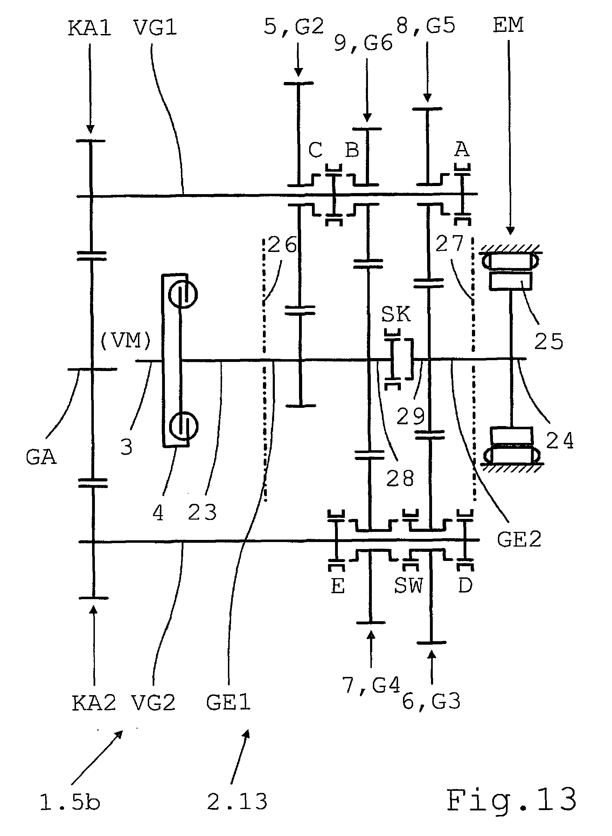

Ein in Fig. 13 abgebildeter Hybridantriebsstrang 1.5b, der eine zweite Abwandlung des fünften Hybridantriebsstrangs 1.5 nach Fig. 11 darstellt und zu diesem funktionsgleich ist, unterscheidet sich von diesem dadurch, dass die Gangradsätze 5 bis 9 gegenüber der Anordnung in dem Schaltgetriebe 2.11 von Fig. 11 axial gespiegelt angeordnet sind. Die zweite Eingangswelle GE2 ist nunmehr axial benachbart zu der ersten Eingangswelle GE1 angeordnet und ragt axial gegenüberliegend aus der betreffenden Gehäusestirnwand 27 des Schaltgetriebes 2.13 heraus. Demzufolge ist die Elektromaschine EM nunmehr auf der dem Verbrennungsmotor VM axial gegenüberliegenden Seite des Schaltgetriebes 2.13 angeordnet, und die zweite Eingangswelle GE2 ist an ihrem getriebeäußeren Ende 24 unmittelbar mit dem Rotor 25 der Elektromaschine EM verbunden.

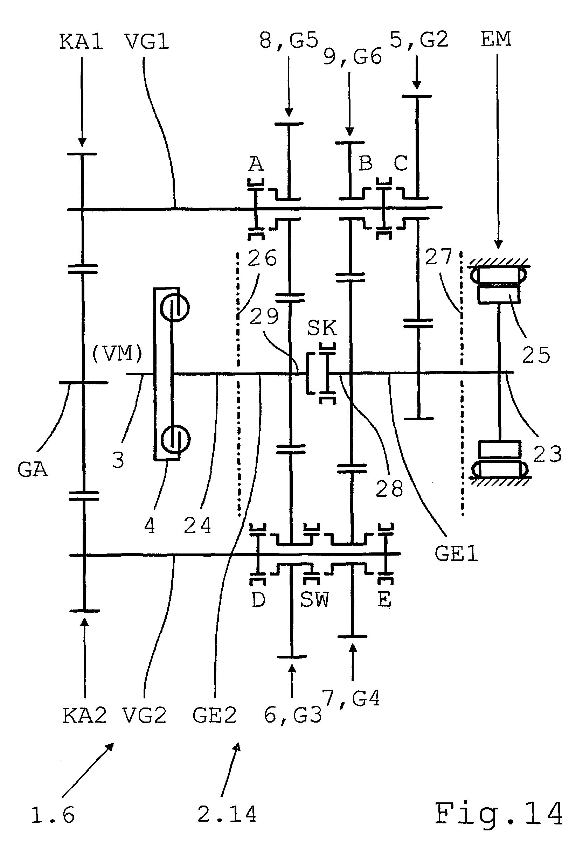

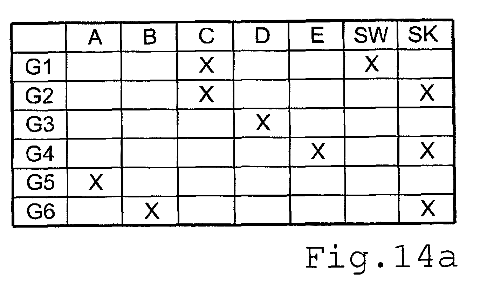

Ein erfindungsgemäßer sechster Hybridantrieb 1.6 nach Fig. 14, der ein aus dem Doppelkupplungsgetriebe 2.0 nach Fig. 21 abgeleitetes Schaltgetriebe 2.14 umfasst, ist weitgehend baugleich zu dem zweiten Hybridantrieb 1.2 nach Fig. 4 und unterscheidet sich von diesem nur dadurch, dass auf eine Reibungskupplung K2 zur Anbindung des Verbrennungsmotors VM an die zweite Eingangswelle GE2 verzichtet wurde. Die zweite Eingangswelle GE2 ist somit an ihrem getriebeäußeren Ende 24 (über den Drehschwingungsdämpfer 4) unmittelbar drehfest mit der Triebwelle 3 des Verbrennungsmotors VM verbunden. Demzufolge kann das Anfahren nur elektromotorisch erfolgen. Da die Drehrichtung der Elektromaschine EM umkehrbar ist, kann auf einen Umkehr-Gangradsatz verzichtet werden. Daher sind in dem Schaltgetriebe 2.14 nach Fig. 14 gegenüber dem Schaltgetriebe 2.4 nach Fig. 4 das Losrad 19 und die zugeordnete Gangkupplung F des Rückwärtsgangs R1 weggelassen.

Für einen Verbrennungsfahrbetrieb stehen bis auf den siebten Vorwärtsgang G7 alle anderen Vorwärtsgänge G1 bis G6 zur Verfügung. Die entsprechenden Gänge G1 bis G6 sind in Fig. 14a in einem tabellarischen Betriebs- und Schaltschema zusammengestellt, in dem der zur Schaltung der Gänge G1 bis G6 eingerückte bzw. geschlossene Zustand der Gangkupplungen A bis E, des Windungs-Schaltelementes SW und des Koppel-Schaltelementes SK jeweils mit einem Kreuz markiert ist.

Im Elektrofahrbetrieb des Hybridantriebs 1.6 gemäß Fig. 14 sind nur die der ersten Eingangswelle GE1 zugeordneten Gänge G2, G4, G6 verfügbar. Im Hybridfahrbetrieb kann die Elektromaschine EM wahlweise in einem der Gänge G2, G4, G6 oder bei eingerücktem Koppel-Schaltelement SK zur Unterstützung des Verbrennungsmotors VM als Motor oder zur Ladung eines elektrischen Energiespeichers als Generator betrieben werden. Eine weitere Kopplung der beiden Eingangswellen GE1, GE2 kann hierzu durch das Einrücken des Windungs-Schaltelementes SW hergestellt werden (SK ausgerückt), was jedoch nachteilig mit einer gegenüber dem Verbrennungsmotor VM niedrigeren Drehzahl der Elektromaschine EM verbunden ist.

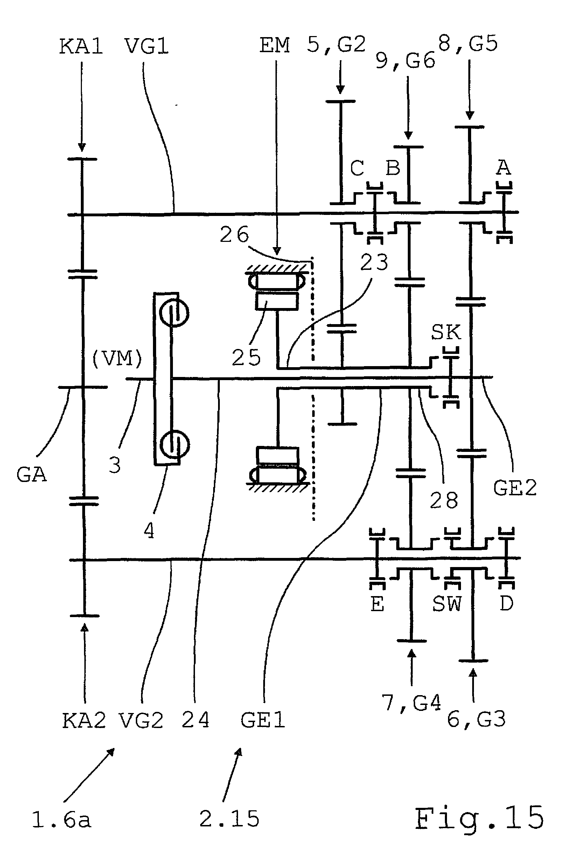

Ein in Fig. 15 abgebildeter Hybridantriebsstrang 1.6a, der eine erste Abwandlung des sechsten Hybridantriebsstrangs 1.6 nach Fig. 14 darstellt und zu diesem funktionsgleich ist, unterscheidet sich von diesem dadurch, dass die Gangradsätze 5 bis 9 gegenüber der Anordnung in dem Schaltgetriebe 2.14 von Fig. 14 axial gespiegelt angeordnet sind. In Fig. 14 ist die erste Eingangswelle GE1 axial benachbart zu der zweiten Eingangswelle GE2 angeordnet und ragt axial gegenüberliegend aus der betreffenden Gehäusestirnwand 27 des Schaltgetriebes 2.14 heraus. Demzufolge ist die Elektromaschine EM in Fig. 14 auf der dem Verbrennungsmotor VM axial gegenüberliegenden Seite des Schaltgetriebes 2.14 angeordnet, und die erste Eingangswelle GE1 ist an ihrem getriebeäußeren Ende 23 unmittelbar mit dem Rotor 25 der Elektromaschine EM verbunden.

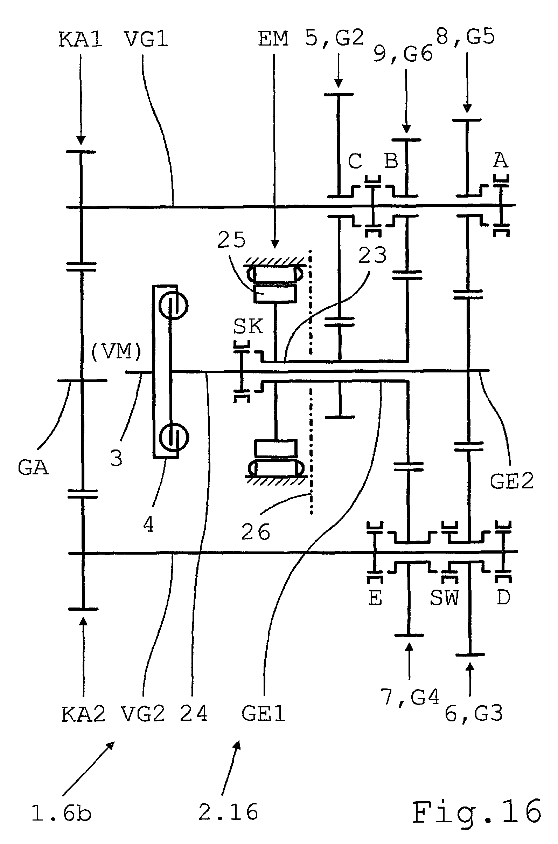

Ein in Fig. 16 abgebildeter Hybridantriebsstrang 1.6b, der eine zweite Abwandlung des sechsten Hybridantriebsstrangs 1.6 nach Fig. 14 darstellt und dieselben Funktionsmöglichkeiten aufweist, unterscheidet sich von dem zuvor beschriebenen Hybridantriebsstrang 1.5a nach Fig. 15 dadurch, dass das Koppel-Schaltelement SK nunmehr außerhalb des Schaltgetriebes 2.16 zwischen dem getriebeäußeren Ende 23 der als Hohlwelle ausgebildeten ersten Eingangswelle GE1 und der zentralen zweiten Eingangswelle GE2 angeordnet ist.

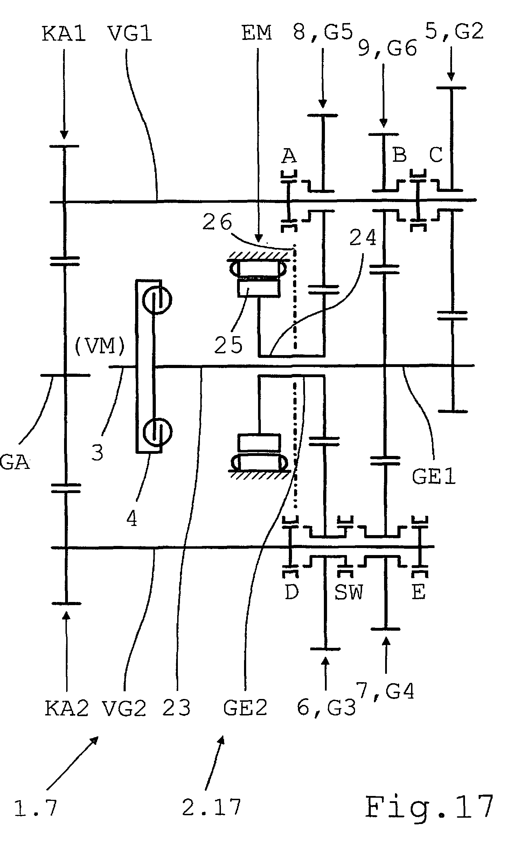

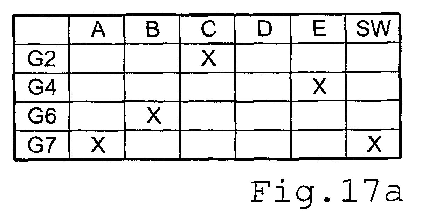

Ein erfindungsgemäßer siebter Hybridantrieb 1.7 nach Fig. 17, der ein aus dem Doppelkupplungsgetriebe 2.0 nach Fig. 21 abgeleitetes Schaltgetriebe 2.17 umfasst, ist weitgehend baugleich zu dem ersten Hybridantrieb 1.1 nach Fig. 1, unterscheidet sich von diesem jedoch dadurch, dass auf ein Koppel-Schaltelement SK zur Kopplung der beiden Eingangswellen GE1, GE2 sowie auf eine Reibungskupplung K1 zur Anbindung des Verbrennungsmotors VM an die erste Eingangswelle GE1 verzichtet wurde. Die erste Eingangswelle GE1 ist somit an ihrem getriebeäußeren Ende 23 (über den Drehschwingungsdämpfer 4) unmittelbar drehfest mit der Triebwelle 3 des Verbrennungsmotors VM verbunden. Demzufolge kann das Anfahren nur elektromotorisch erfolgen. Da die Drehrichtung der Elektromaschine EM umkehrbar ist, kann auf einen Umkehr-Gangradsatz verzichtet werden. Daher sind in dem Schaltgetriebe 2.17 nach Fig. 17 gegenüber dem Schaltgetriebe 2.1 nach Fig. 1 das Losrad 19 und die zugeordnete Gangkupplung F des Rückwärtsgangs R1 weggelassen.

Für einen Verbrennungsfahrbetrieb sind daher nur die der ersten Eingangswelle GE1 zugeordneten Gänge G2, G4, G6 und der an die erste Eingangswelle GE1 angebundene, als Windungsgang wirksame siebte Vorwärtsgang G7 verfügbar. Die entsprechenden Gänge G2, G4, G6, G7 sind in Fig. 17a in einem tabellarischen Betriebs- und Schaltschema zusammengestellt, in dem der zur Schaltung der Gänge G2, G4, G6, G7 eingerückte bzw. geschlossene Zustand der Gangkupplungen A bis E und des Windungs-Schaltelementes SW jeweils mit einem Kreuz markiert ist.

Im Elektrofahrbetrieb des Hybridantriebs 1.7 sind nur die der zweiten Eingangswelle GE2 zugeordneten Gänge G3, G5 verfügbar. Im Hybridfahrbetrieb kann die Elektromaschine EM bei eingelegtem dritten oder fünften Vorwärtsgang G3, G5 zur Unterstützung des Verbrennungsmotors VM als Motor oder zur Ladung eines elektrischen Energiespeichers als Generator betrieben werden. Eine Kopplung der beiden Eingangswellen GE1, GE2 kann hierzu auch durch das Einrücken des Windungs-Schaltelementes SW hergestellt werden, was vorteilhaft zu einer gegenüber dem Verbrennungsmotor VM höheren Drehzahl der Elektromaschine EM führt.

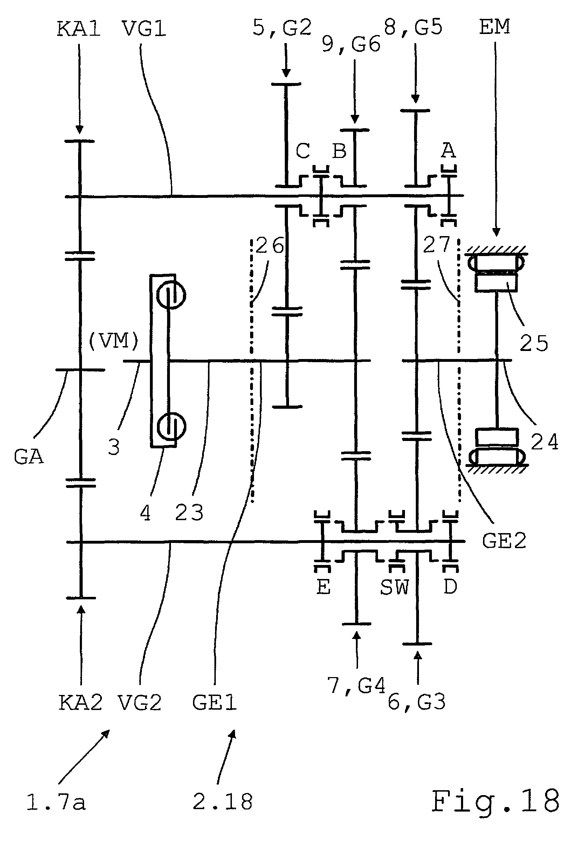

Bei dem in Fig. 18 abgebildeten Hybridantriebsstrang 1.7a, der eine Abwandlung des siebten Hybridantriebsstrangs 1.7 nach Fig. 17 darstellt und zu diesem funktionsgleich ist, sind die Gangradsätze 5 bis 9 gegenüber der Anordnung in dem Schaltgetriebe 2.17 von Fig. 17 axial gespiegelt angeordnet, und die zweite Eingangswelle GE2 ist axial benachbart zu der ersten Eingangswelle GE1 angeordnet und ragt axial gegenüberliegend aus der betreffenden Gehäusestirnwand 27 des Schaltgetriebes 2.17 heraus. Demzufolge ist die Elektromaschine EM nunmehr auf der dem Verbrennungsmotor VM axial gegenüberliegenden Seite des Schaltgetriebes 2.17 angeordnet, und die zweite Eingangswelle GE2 ist an ihrem getriebeäußeren Ende 24 unmittelbar mit dem Rotor 25 der Elektromaschine EM verbunden.

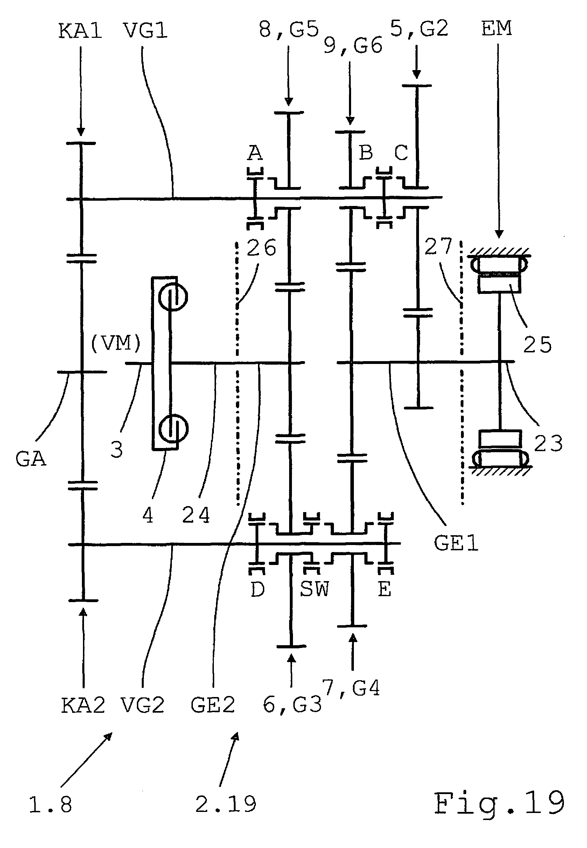

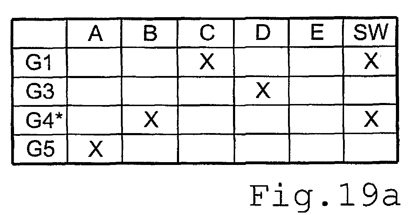

Ein erfindungsgemäßer achter Hybridantrieb 1.8 nach Fig. 19, der ein aus dem Doppelkupplungsgetriebe 2.0 nach Fig. 21 abgeleitetes Schaltgetriebe 2.19 umfasst, ist weitgehend baugleich zu dem zweiten Hybridantrieb 1.2 nach Fig. 4, unterscheidet sich von diesem jedoch dadurch, dass auf ein Koppel-Schaltelement SK zur Kopplung der beiden Eingangswellen GE1, GE2 sowie auf eine Reibungskupplung K2 zur Anbindung des Verbrennungsmotors VM an die zweite Eingangswelle GE2 verzichtet wurde. Die zweite Eingangswelle GE2 ist somit an ihrem getriebeäußeren Ende 24 (über den Drehschwingungsdämpfer 4) unmittelbar drehfest mit der Triebwelle 3 des Verbrennungsmotors VM verbunden. Demzufolge kann das Anfahren nur elektromotorisch erfolgen. Da die Drehrichtung der Elektromaschine EM umkehrbar ist, kann auf einen Umkehr-Gangradsatz verzichtet werden. Daher sind in dem Schaltgetriebe 2.19 nach Fig. 19 gegenüber dem Schaltgetriebe 2.4 nach Fig. 4 das Losrad 19 und die zugeordnete Gangkupplung F des Rückwärtsgangs R1 weggelassen.

Für einen Verbrennungsfahrbetrieb sind nur die der zweiten Eingangswelle GE2 zugeordneten Gänge G3 und G5 sowie der an die zweite Eingangswelle GE2 angebundene, als Windungsgang wirksame erste Vorwärtsgang G1 verfügbar. Durch das gleichzeitige Einrücken der Gangkupplung B und des Windungs-Schaltelementes SW kann jedoch ein weiterer Vorwärtsgang G4* als Windungsgang geschaltet werden, der bislang nicht genutzt wurde, und dessen Übersetzung in etwa derjenigen des vierten Gangs G4 entspricht. Die entsprechenden Gänge G1, G3, G4*, G5 sind in Fig. 19a in einem tabellarischen Betriebs- und Schaltschema zusammengestellt, in dem der zur Schaltung der Gänge G1, G3, G4*, G5 eingerückte bzw. geschlossene Zustand der Gangkupplungen A bis E und des Windungs-Schaltelementes SW jeweils mit einem Kreuz markiert ist.

Im Elektrofahrbetrieb des Hybridantriebs 1.8 sind nur die der ersten Eingangswelle GE1 zugeordneten Gänge G2, G4, G6 verfügbar. Im Hybridfahrbetrieb kann die Elektromaschine EM bei einem eingelegten Gang G2, G4, G6 zur Unterstützung des Verbrennungsmotors VM als Motor oder zur Ladung eines elektrischen Energiespeichers als Generator betrieben werden. Eine Kopplung der beiden Eingangswellen GE1, GE2 kann hierzu auch durch das Einrücken des Windungs-Schaltelementes SW hergestellt werden, was aber nachteilig mit einer gegenüber dem Verbrennungsmotor VM niedrigeren Drehzahl der Elektromaschine EM verbunden ist.

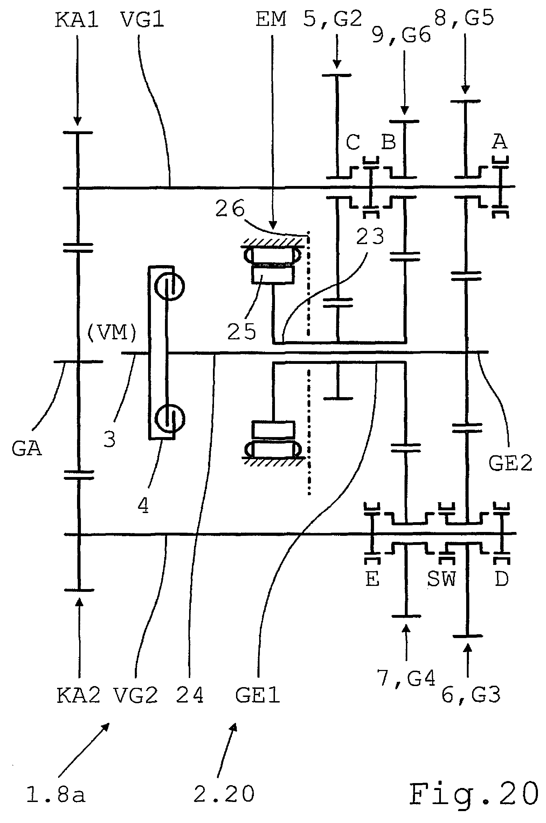

Bei dem in Fig. 20 abgebildeten Hybridantriebsstrang 1.8a, der eine Abwandlung des achten Hybridantriebsstrangs 1.8 nach Fig. 19 darstellt und zu diesem funktionsgleich ist, sind die Gangradsätze 5 bis 9 gegenüber der Anordnung in dem Schaltgetriebe 2.19 von Fig. 19 axial gespiegelt angeordnet, und die erste Eingangswelle GE1 ist als eine Hohlwelle ausgebildet sowie koaxial über der zweiten Eingangswelle GE2 angeordnet, und ragt axial gleichseitig wie die zweite Eingangswelle GE2 aus der betreffenden Gehäusestirnwand 26 des Schaltgetriebes 2.20 heraus. Demzufolge ist die Elektromaschine EM nunmehr axial auf derselben Seite des Schaltgetriebes 2.20 wie der Verbrennungsmotor VM angeordnet, und die erste Eingangswelle GE1 ist an ihrem getriebeäußeren Ende 23 unmittelbar mit dem Rotor 25 der Elektromaschine EM verbunden.

### Bezuaszeichen

- 1.1: Erster Hybridantrieb
- 1.1a: Hybridantrieb, erste Abwandlung von 1.1
- 1.1b: Hybridantrieb, zweite Abwandlung von 1.1
- 1.2: Zweiter Hybridantrieb
- 1.2a: Hybridantrieb, erste Abwandlung von 1.2
- 1.2b: Hybridantrieb, zweite Abwandlung von 1.2
- 1.3: Dritter Hybridantrieb
- 1.3a: Hybridantrieb, Abwandlung von 1.3
- 1.4: Vierter Hybridantrieb
- 1.4a: Hybridantrieb, Abwandlung von 1.4
- 1.5: Fünfter Hybridantrieb
- 1.5a: Hybridantrieb, erste Abwandlung von 1.5
- 1.5b: Hybridantrieb, zweite Abwandlung von 1.5
- 1.6: Sechster Hybridantrieb
- 1.6a: Hybridantrieb, erste Abwandlung von 1.6
- 1.6b: Hybridantrieb, zweite Abwandlung von 1.6
- 1.7: Siebter Hybridantrieb
- 1.7a: Hybridantrieb, Abwandlung von 1.7
- 1.8: Achter Hybridantrieb
- 1.8a: Hybridantrieb, Abwandlung von 1.8
- 2.0: Doppelkupplungsgetriebe
- 2.1: Erstes Schaltgetriebe
- 2.2: Zweites Schaltgetriebe
- 2.3: Drittes Schaltgetriebe
- 2.4: Viertes Schaltgetriebe
- 2.5: Fünftes Schaltgetriebe
- 2.6: Sechstes Schaltgetriebe
- 2.7: Siebtes Schaltgetriebe
- 2.8: Achtes Schaltgetriebe
- 2.9: Neuntes Schaltgetriebe
- 2.10: Zehntes Schaltgetriebe
- 2.11: Elftes Schaltgetriebe
- 2.12: Zwölftes Schaltgetriebe
- 2.13: Dreizehntes Schaltgetriebe
- 2.14: Vierzehntes Schaltgetriebe
- 2.15: Fünfzehntes Schaltgetriebe
- 2.16: Sechzehntes Schaltgetriebe
- 2.17: Siebzehntes Schaltgetriebe
- 2.18: Achtzehntes Schaltgetriebe
- 2.19: Neunzehntes Schaltgetriebe
- 2.20: Zwanzigstes Schaltgetriebe
- 3: Triebwelle
- 4: Drehschwingungsdämpfer
- 5: Gangradsatz von G2
- 6: Gangradsatz von G3
- 7: Gangradsatz von G4
- 8: Gangradsatz von G5
- 9: Gangradsatz von G6
- 10: Gangradsatz von R1
- 11: Festrad von G2, R1
- 12: Festrad von G3, G5
- 13: Festrad von G4, G6
- 14: Losrad von G2
- 15: Losrad von G3
- 16: Losrad von G4
- 17: Losrad von G5
- 18: Losrad von G6
- 19: Losrad von R1
- 20: Festrad von KA1
- 21: Festrad von KA2
- 22: Abtriebsrad von KA1, KA2
- 23: Getriebeäußeres Ende von GE1
- 24: Getriebeäußeres Ende von GE2
- 25: Rotor von EM
- 26: Gehäusestirnwand
- 27: Gehäusestirnwand
- 28: Getriebeinneres Ende von GE1
- 29: Getriebeinneres Ende von GE2
- A: Gangkupplung von G5
- B: Gangkupplung von G6
- C: Gangkupplung von G2
- D: Gangkupplung von G3
- E: Gangkupplung von G4
- EK: Getriebestufe
- EM: Erste Elektromaschine
- EM2: Zweite Elektromaschine
- F: Gangkupplung von R1
- G1 - G7: Vorwärtsgänge
- GA: Ausgangswelle
- GE1: Erste Eingangswelle
- GE2: Zweite Eingangswelle
- i_{EK}: Übersetzung von EK
- KA1: Erste Ausgangskonstante
- KA2: Zweite Ausgangskonstante
- K1: Erste Reibungskupplung
- K2: Zweite Reibungskupplung
- R1: Erster Rückwärtsgang
- R2: Zweiter Rückwärtsgang
- SK: Koppel-Schaltelement
- SW: Windungs-Schaltelement
- VM: Verbrennungsmotor

## Patentansprüche

1. Hybridantrieb eines Kraftfahrzeugs, der ein aus einem Doppelkupplungsgetriebe (2.0) mit zwei koaxial angeordneten Eingangswellen (GE1, GE2) und einer gemeinsamen Ausgangswelle (GA) abgeleitetes automatisiertes Schaltgetriebe (2.1 - 2.20) aufweist, dessen eine Eingangswelle (GE1; GE2) mit der Triebwelle (3) eines Verbrennungsmotors (VM) verbindbar und über eine zugeordnete erste Gruppe selektiv schaltbarer Gangradsätze (5, 7, 9, 10; 6, 8) mit der Ausgangswelle (GA) in Triebverbindung bringbar ist, und dessen andere Eingangswelle (GE2; GE1) mit dem Rotor (25) einer als Motor und als Generator betreibbaren Elektromaschine (EM) in Triebverbindung steht sowie über eine zugeordnete zweite Gruppe selektiv schaltbarer Gangradsätze (6, 8; 5, 7, 9, 10) mit der Ausgangswelle (GA) in Triebverbindung bringbar ist, wobei
- die Gangradsätze (5 -10) jeweils zwischen einer der beiden Eingangswellen (GE1, GE2) und einer von zwei über jeweils eine Ausgangskonstante (KA1, KA2) mit der Ausgangswelle (GA) in Triebverbindung stehenden Vorgelegewellen (VG1, VG2) angeordnet sind,
- jeder Gangradsatz (5 - 10) ein drehfest auf der zugeordneten Eingangswelle (GE1, GE2) angeordnetes Festrad (11 - 13) und ein auf der betreffenden Vorgelegewelle (VG1, VG2) angeordnetes Losrad (14 - 19) umfasst,
- pro Eingangswelle (GE1, GE2) zumindest die zwei getriebeinneren Gangradsätze (7, 9; 6, 8) mit auf unterschiedlichen Vorgelegewellen (VG1, VG2) angeordneten Losrädern (16, 18; 15, 17) unter Nutzung eines gemeinsamen Festrades (12, 13) in einer gemeinsamen Radialebene angeordnet sind,
- mindestens zwei auf einer der beiden Vorgelegewellen (VG1, VG2) angeordnete Losräder (15, 16) von zwei unterschiedlichen Eingangswellen (GE1, GE2) zugeordneten getriebeinneren Gangradsätzen (6, 7) über ein Windungs-Schaltelement (SW) miteinander koppelbar sind, und
- die beiden Ausgangskonstanten (KA1, KA2) unter Nutzung eines gemeinsamen, auf der Ausgangswelle (GA) angeordneten Abtriebsrades (22) in einer gemeinsamen Radialebene angeordnet sind,
**dadurch gekennzeichnet, dass**
- die eine Eingangswelle (GE1; GE2) zentral angeordnet ist und axial einseitig aus einer Gehäusestirnwand (26) des Schaltgetriebes (2.1, 2.2, 2.5, 2.6, 2.7, 2.10, 2.11, 2.12, 2.15, 2.16, 2.17, 2.20) herausragt,
- die andere Eingangswelle (GE2; GE1) als eine Hohlwelle ausgebildet und koaxial über der einen Eingangswelle (GE1 oder GE2) angeordnet ist sowie axial gleichseitig aus der Gehäusestirnwand (26) herausragt, und
- der Verbrennungsmotor (VM) an dem getriebeäußeren Ende (23, 24) der zentralen Eingangswelle (GE1 oder GE2) und die Elektromaschine (EM) axial gleichseitig an dem getriebeäußeren Ende (24, 23) der als Hohlwelle ausgebildeten Eingangswelle (GE2 oder GE1) angeordnet ist.

2. Hybridantrieb nach Anspruch 1, **dadurch gekennzeichnet, dass** ein Koppel-Schaltelement (SK) zur Kopplung der beiden Eingangswellen (GE1, GE2) vorgesehen ist.

3. Hybridantrieb nach Anspruch 1 und 2, **dadurch gekennzeichnet, dass** das Koppel-Schaltelement (SK) innerhalb des Schaltgetriebes (2.1, 2.5, 2.11, 2.15) zwischen dem getriebeinneren Ende (28, 29) der als Hohlwelle ausgebildeten Eingangswelle (GE2 oder GE1) und der zentralen Eingangswelle (GE1 oder GE2) angeordnet ist.

4. Hybridantrieb nach Anspruch 1 und 2, **dadurch gekennzeichnet, dass** das Koppel-Schaltelement (SK) außerhalb des Schaltgetriebes (2.2, 2.6, 2.12, 2.16) zwischen dem getriebeäußeren Ende (23, 24) der als Hohlwelle ausgebildeten Eingangswelle (GE2; GE1) und der zentralen Eingangswelle (GE1; GE2) angeordnet ist.

5. Hybridantrieb eines Kraftfahrzeugs, der ein aus einem Doppelkupplungsgetriebe (2.0) mit zwei koaxial angeordneten Eingangswellen (GE1, GE2) und einer gemeinsamen Ausgangswelle (GA) abgeleitetes automatisiertes Schaltgetriebe (2.1 - 2.20) aufweist, dessen eine Eingangswelle (GE1; GE2) mit der Triebwelle (3) eines Verbrennungsmotors (VM) verbindbar und über eine zugeordnete erste Gruppe selektiv schaltbarer Gangradsätze (5, 7, 9, 10; 6, 8) mit der Ausgangswelle (GA) in Triebverbindung bringbar ist, und dessen andere Eingangswelle (GE2; GE1) mit dem Rotor (25) einer als Motor und als Generator betreibbaren Elektromaschine (EM) in Triebverbindung steht sowie über eine zugeordnete zweite Gruppe selektiv schaltbarer Gangradsätze (6, 8; 5, 7, 9, 10) mit der Ausgangswelle (GA) in Triebverbindung bringbar ist, wobei
- die Gangradsätze (5 - 10) jeweils zwischen einer der beiden Eingangswellen (GE1, GE2) und einer von zwei über jeweils eine Ausgangskonstante (KA1, KA2) mit der Ausgangswelle (GA) in Triebverbindung stehenden Vorgelegewellen (VG1, VG2) angeordnet sind,
- jeder Gangradsatz (5 - 10) ein drehfest auf der zugeordneten Eingangswelle (GE1, GE2) angeordnetes Festrad (11 - 13) und ein auf der betreffenden Vorgelegewelle (VG1, VG2) angeordnetes Losrad (14 - 19) umfasst,
- pro Eingangswelle (GE1, GE2) zumindest die zwei getriebeinneren Gangradsätze (7, 9; 6, 8) mit auf unterschiedlichen Vorgelegewellen (VG1, VG2) angeordneten Losrädern (16, 18; 15, 17) unter Nutzung eines gemeinsamen Festrades (12, 13) in einer gemeinsamen Radialebene angeordnet sind,
- mindestens zwei auf einer der beiden Vorgelegewellen (VG1, VG2) angeordnete Losräder (15, 16) von zwei unterschiedlichen Eingangswellen (GE1, GE2) zugeordneten getriebeinneren Gangradsätzen (6, 7) über ein Windungs-Schaltelement (SW) miteinander koppelbar sind, und
- die beiden Ausgangskonstanten (KA1, KA2) unter Nutzung eines gemeinsamen, auf der Ausgangswelle (GA) angeordneten Abtriebsrades (22) in einer gemeinsamen Radialebene angeordnet sind,
**dadurch gekennzeichnet, dass**
- die beiden Eingangswellen (GE1, GE2) axial benachbart zueinander angeordnet und axial gegenüberliegend jeweils aus einer Gehäusestimwand (26, 27) des Schaltgetriebes (2.3, 2.4, 2.8, 2.9, 2.13, 2.14, 2.18, 2.19) herausragen, und
- der Verbrennungsmotor (VM) an dem getriebeäußeren Ende (23, 24) der einen Eingangswelle (GE1; GE2) und die Elektromaschine (EM) axial gegenüberliegend an dem getriebeäußeren Ende (24, 23) der anderen Eingangswelle (GE2; GE1) angeordnet ist.

6. Hybridantrieb nach Anspruch 5, **dadurch gekennzeichnet, dass** ein Koppel-Schaltelement (SK) zur Kopplung der beiden Eingangswellen (GE1, GE2) vorgesehen ist.

7. Hybridantrieb nach Anspruch 5 und 6, **dadurch gekennzeichnet, dass** das Koppel-Schaltelement (SK) innerhalb des Schaltgetriebes (2.3, 2.4, 2.13, 2.14) zwischen den getriebeinneren Enden (28, 29) der beiden Eingangswellen (GE1, GE2) angeordnet ist.

8. Hybridantrieb nach einem der vorherigen Ansprüche, **dadurch gekennzeichnet, dass** die eine Eingangswelle (GE1; GE2) über eine ein- und ausrückbare Reibungskupplung (K1 oder K2) mit der Triebwelle (3) des Verbrennungsmotors (VM) verbindbar ist.

9. Hybridantrieb nach einem der Ansprüche 1 bis 7, **dadurch gekennzeichnet, dass** die eine Eingangswelle (GE1; GE2) unmittelbar oder über einen Drehschwingungsdämpfer (4) drehfest mit der Triebwelle (3) des Verbrennungsmotors (VM) verbunden ist.

10. Hybridantrieb nach einem der Ansprüche 1 bis 9, **dadurch gekennzeichnet, dass** die andere Eingangswelle (GE2; GE1) unmittelbar drehfest mit dem Rotor (25) der Elektromaschine (EM) verbunden ist.

11. Hybridantrieb nach einem der Ansprüche 1 bis 9, **dadurch gekennzeichnet, dass** die andere Eingangswelle (GE2; GE1) über eine Getriebestufe (EK), die eine Underdrive-Übersetzung (i_{EK} > 1) aufweist, mit dem Rotor (25) der Elektromaschine (EM) in Triebverbindung steht.

12. Hybridantrieb nach einem der vorherigen Ansprüche, **dadurch gekennzeichnet, dass** zumindest ein gemeinsames Festrad (11, 12, 13) von zwei in einer gemeinsamen Radialebene angeordneten Gangradsätzen (5, 6, 7, 8, 9, 10) als ein Stufenrad ausgebildet ist.

13. Hybridantrieb nach einem der vorherigen Ansprüche, **dadurch gekennzeichnet, dass** die eine Eingangswelle (GE1; GE2) zusätzlich mit dem Rotor einer zweiten Elektromaschine (EM2) in Triebverbindung steht, die an dem getriebeäußeren Ende (23, 24) dieser Eingangswelle (GE1 oder GE2) angeordnet ist.

14. Hybridantrieb nach Anspruch 13, **dadurch gekennzeichnet, dass** die zweite Elektromaschine (EM2) als ein Starter-Generator ausgebildet ist.

## Claims

1. Hybrid drive of a motor vehicle, which has an automated shift gearbox (2.1 - 2.20) derived from a dual-clutch gearbox (2.0) with two coaxially arranged input shafts (GE1, GE2) and a common output shaft (GA), one input shaft (GE1; GE2) of which can be connected to the drive shaft (3) of an internal combustion engine (VM) and can be connected in terms of drive to the output shaft (GA) by way of an associated first group of selectively shiftable gearwheel sets (5, 7, 9, 10; 6, 8), and the other input shaft (GE2; GE1) of which is connected in terms of drive to the rotor (25) of an electric machine (EM), operable as a motor and as a generator, and can be connected in terms of drive to the output shaft (GA) by way of an associated second group of selectively shiftable gearwheel sets (6, 8; 5, 7, 9, 10), wherein
- the gearwheel sets (5 - 10) are arranged in each case between one of the two input shafts (GE1, GE2) and one of two countershafts (VG1, VG2), which are connected in terms of drive to the output shaft (GA) by way of in each case one output constant (KA1, KA2),
- each gearwheel set (5 - 10) comprises a fixed gear (11 - 13), arranged rotationally conjointly on the associated input shaft (GE1, GE2), and a floating gear (14 - 19), arranged on the respective countershaft (VG1, VG2),
- for each input shaft (GE1, GE2), at least the two gearbox-inner gearwheel sets (7, 9; 6, 8) are arranged, with floating gears (16, 18; 15, 17) arranged on different countershafts (VG1, VG2), and utilizing a common fixed gear (12, 13), in a common radial plane,
- at least two floating gears (15, 16), arranged on one of the two countershafts (VG1, VG2), of gearbox-inner gearwheel sets (6, 7) assigned to two different input shafts (GE1, GE2) can be coupled to one another by way of a torsion shift element (SW), and
- the two output constants (KA1, KA2) are arranged, utilizing a common drive output gear (22) arranged on the output shaft (GA), in a common radial plane,
**characterized in that**
- one input shaft (GE1; GE2) is arranged centrally and projects out of a housing face wall (26) of the shift gearbox (2.1, 2.2, 2.5, 2.6, 2.7, 2.10, 2.11, 2.12, 2.15, 2.16, 2.17, 2.20), axially at one side,
- the other input shaft (GE2; GE1) is in the form of a hollow shaft and is arranged coaxially over said one input shaft (GE1 or GE2) and projects out of the housing face wall (26) axially at the same side, and
- the internal combustion engine (VM) is arranged on the gearbox-outer end (23, 24) of the central input shaft (GE1 or GE2) and the electric machine (EM) is arranged axially at the same side on the gearbox-outer end (24, 23) of the input shaft (GE2 or GE1) in the form of a hollow shaft.

2. Hybrid drive according to Claim 1, **characterized in that** a coupling shift element (SK) is provided for coupling the two input shafts (GE1, GE2).

3. Hybrid drive according to Claim 1 and 2, **characterized in that** the coupling shift element (SK) is arranged within the shift gearbox (2.1, 2.5, 2.11, 2.15) between the gearbox-inner end (28, 29) of the input shaft (GE2 or GE1) in the form of a hollow shaft and the central input shaft (GE1 or GE2).

4. Hybrid drive according to Claim 1 and 2, **characterized in that** the coupling shift element (SK) is arranged outside the shift gearbox (2.2, 2.6, 2.12, 2.16) between the gearbox-outer end (23, 24) of the input shaft (GE2; GE1) in the form of a hollow shaft and the central input shaft (GE1; GE2).

5. Hybrid drive of a motor vehicle, which has an automated shift gearbox (2.1 - 2.20) derived from a dual-clutch gearbox (2.0) with two coaxially arranged input shafts (GE1, GE2) and a common output shaft (GA), one input shaft (GE1; GE2) of which can be connected to the drive shaft (3) of an internal combustion engine (VM) and can be connected in terms of drive to the output shaft (GA) by way of an associated first group of selectively shiftable gearwheel sets (5, 7, 9, 10; 6, 8), and the other input shaft (GE2; GE1) of which is connected in terms of drive to the rotor (25) of an electric machine (EM), operable as a motor and as a generator, and can be connected in terms of drive to the output shaft (GA) by way of an associated second group of selectively shiftable gearwheel sets 6, 8; 5, 7, 9, 10), wherein
- the gearwheel sets (5 - 10) are arranged in each case between one of the two input shafts (GE1, GE2) and one of two countershafts (VG1, VG2), which are connected in terms of drive to the output shaft (GA) by way of in each case one output constant (KA1, KA2),
- each gearwheel set (5 - 10) comprises a fixed gear (11 - 13), arranged rotationally conjointly on the associated input shaft (GE1, GE2), and a floating gear (14 - 19), arranged on the respective countershaft (VG1, VG2),
- for each input shaft (GE1, GE2), at least the two gearbox-inner gearwheel sets (7, 9; 6, 8) are arranged, with floating gears (16, 18; 15, 17) arranged on different countershafts (VG1, VG2), and utilizing a common fixed gear (12, 13), in a common radial plane,
- at least two floating gears (15, 16), arranged on one of the two countershafts (VG1, VG2), of gearbox-inner gearwheel sets (6, 7) assigned to two different input shafts (GE1, GE2) can be coupled to one another by way of a torsion shift element (SW), and
- the two output constants (KA1, KA2) are arranged, utilizing a common drive output gear (22) arranged on the output shaft (GA), in a common radial plane,
**characterized in that**
- the two input shafts (GE1, GE2) are arranged axially adjacent to one another and project axially oppositely in each case out of a housing face wall (26, 27) of the shift gearbox (2.3, 2.4, 2.8, 2.9, 2.13, 2.14, 2.18, 2.19), and
- the internal combustion engine (VM) is arranged on the gearbox-outer end (23, 24) of one input shaft (GE1; GE2) and the electric machine (EM) is arranged axially oppositely on the gearbox-outer end (24, 23) of the other input shaft (GE2; GE1).

6. Hybrid drive according to Claim 5, **characterized in that** a coupling shift element (SK) is provided for coupling the two input shafts (GE1, GE2).

7. Hybrid drive according to Claim 5 and 6, **characterized in that** the coupling shift element (SK) is arranged within the shift gearbox (2.3, 2.4, 2.13, 2.14) between the gearbox-inner ends (28, 29) of the two input shafts (GE1, GE2).

8. Hybrid drive according to one of the preceding claims, **characterized in that** one input shaft (GE1; GE2) can be connected to the drive shaft (3) of the internal combustion engine (VM) by way of an engageable and disengageable friction clutch (K1 or K2).

9. Hybrid drive according to one of Claims 1 to 7, **characterized in that** one input shaft (GE1; GE2) is connected rotationally conjointly to the drive shaft (3) of the internal combustion engine (VM) directly or via a rotary vibration damper (4).

10. Hybrid drive according to one of Claims 1 to 9, **characterized in that** the other input shaft (GE2; GE1) is directly connected rotationally conjointly to the rotor (25) of the electric machine (EM).

11. Hybrid drive according to one of Claims 1 to 9, **characterized in that** the other input shaft (GE2; GE1) is connected in terms of drive to the rotor (25) of the electric machine (EM) by way of a gear stage (EK) which has an under drive transmission ratio (i_{EK} > 1).

12. Hybrid drive according to one of the preceding claims, **characterized in that** at least one common fixed gear (11, 12, 13) of two gearwheel sets (5, 6, 7, 8, 9, 10) arranged in a common radial plane is in the form of a stepped gear.

13. Hybrid drive according to one of the preceding claims, **characterized in that** one input shaft (GE1; GE2) is additionally connected in terms of drive to the rotor of a second electric machine (EM2) which is arranged on the gearbox-outer end (23, 24) of said input shaft (GE1 or GE2).

14. Hybrid drive according to Claim 13, **characterized in that** the second electric machine (EM2) is in the form of a starter-generator.

## Revendications

1. Entraînement hybride de véhicule à moteur comportant une boîte de vitesses automatisée (2.1 - 2.20) dérivée à partir d'une boîte de vitesses à double embrayage (2.0) avec deux arbres d'entrée (GE1, GE2) disposés dans le plan coaxial et un arbre de sortie (GA) commun, un arbre d'entrée (GE1 ; GE2) de ladite boîte de vitesses pouvant être relié à l'arbre d'entraînement (3) d'un moteur à combustion interne (VM) et pouvant être amené en liaison d'entraînement avec l'arbre de sortie (GA) via un premier groupe associé de jeux de pignons de rapport (5, 7, 9, 10 ; 6, 8) pouvant être passés de façon sélective et l'autre arbre d'entrée (GE2 ; GE1) de ladite boîte de vitesses étant en liaison d'entraînement avec le rotor (25) d'une machine électrique (EM) pouvant être entraînée sous la forme d'un moteur et d'un générateur et ledit autre arbre d'entrée pouvant être amené en liaison d'entraînement avec l'arbre de sortie (GA) via un deuxième groupe associé de jeux de pignons de rapport (6, 8 ; 5, 7, 9, 10) pouvant être passés de façon sélective ;
- les jeux de pignons de rapport (5 - 10) sont respectivement disposés entre un des deux arbres d'entrée (GE1, GE2) et un des deux arbres intermédiaires (VG1, VG2) placés en liaison d'entraînement avec l'arbre de sortie (GA) via respectivement une constante de sortie (KA1, KA2) ;
- chaque jeu de pignons de rapport (5 - 10) comprend une roue fixe (11 - 13) disposée solidairement en rotation sur l'arbre d'entrée (GE1, GE2) associé et une roue folle (14 - 19) disposée sur l'arbre intermédiaire (VG1, VG2) concerné ;
- pour chaque arbre d'entrée (GE1, GE2), au moins les deux jeux de pignons de rapport (7, 9 ; 6, 8) internes à la boîte de vitesses étant disposés dans un plan radial commun avec les roues folles (16, 18 ; 15, 17) disposées sur différents arbres intermédiaires (VG1, VG2) en utilisant une roue fixe (12, 13) commune ;
- au moins deux roues folles (15, 16) disposées sur un des deux arbres intermédiaires (VG1, VG2) pouvant être couplées entre elles à partir de deux arbres d'entrée (GE1, GE2) différents de jeux de pignons de rapport (6, 7) internes à la boîte de vitesses associés, via un élément de changement de vitesse à spire (SW) ; et
- les deux constantes de sortie (KA1, KA2) étant disposées dans un plan radial commun en utilisant une roue d'entraînement en sortie (22) commune disposée sur l'arbre de sortie (GA) ;
**caractérisé en ce que** :
- le premier arbre d'entrée (GE1 ; GE2) est disposé de façon centrale et ressort dans le plan axial d'un côté hors d'une paroi avant de carter (26) de la boîte de vitesses (2.1, 2.2, 2.5, 2.6, 2.7, 2.10, 2.11, 2.12, 2.15, 2.16, 2.17, 2.20) ;
- l'autre arbre d'entrée (GE2 ; GE1) est réalisé sous la forme d'un arbre creux et est disposé dans le plan coaxial au-dessus du premier arbre d'entrée (GE1 ou GE2) et ressort dans le plan axial du même côté hors de la paroi avant de carter (26) ; et
- le moteur à combustion interne (VM) est disposé au niveau de l'extrémité extérieure de boîte de vitesses (23, 24) de l'arbre d'entrée (GE1 ou GE2) central et la machine électrique (EM) est disposée dans le plan axial du même côté, au niveau de l'extrémité extérieure de boîte de vitesses (24, 23) de l'arbre d'entrée (GE2 ou GE1) réalisé sous la forme de l'arbre creux.

2. Entraînement hybride selon la revendication 1, **caractérisé en ce qu'**un élément de changement de vitesse à couplage (SK) est prévu pour coupler les deux arbres d'entrée (GE1, GE2).

3. Entraînement hybride selon la revendication 1 et 2, **caractérisé en ce que** l'élément de changement de vitesse à couplage (SK) est disposé à l'intérieur de la boîte de vitesses (2.1, 2.5, 2.11, 2.15) entre l'extrémité (28, 29) interne à la boîte de vitesses de l'arbre d'entrée (GE2 ou GE1) réalisé sous la forme d'un arbre creux et l'arbre d'entrée central (GE1 ou GE2).

4. Entraînement hybride selon la revendication 1 et 2, **caractérisé en ce que** l'élément de changement de vitesse à couplage (SK) est disposé à l'extérieur de la boîte de vitesses (2.2, 2.6, 2.12, 2.16) entre l'extrémité extérieure de boîte de vitesses (23, 24) de l'arbre d'entrée (GE2 ; GE1) réalisé sous la forme d'un arbre creux et l'arbre d'entrée (GE1 ; GE2) central.

5. Entraînement hybride de véhicule à moteur, comportant une boîte de vitesses automatisée (2.1 - 2.20) dérivée à partir d'une boîte de vitesses à double embrayage (2.0) avec deux arbres d'entrée (GE1, GE2) disposés dans le plan coaxial et un arbre de sortie (GA) commun, un arbre d'entrée (GE1 ; GE2) de ladite boîte de vitesses pouvant être relié à l'arbre d'entraînement (3) d'un moteur à combustion interne (VM) et pouvant être amené en liaison d'entraînement avec l'arbre de sortie (GA) via un premier groupe associé de jeux de pignons de rapport (5, 7, 9, 10 ; 6, 8) pouvant être passés de façon sélective et l'autre arbre d'entrée (GE2 ; GE1) de ladite boîte de vitesses étant en liaison d'entraînement avec le rotor (25) d'une machine électrique (EM) pouvant être entraînée sous la forme d'un moteur et d'un générateur et ledit autre arbre d'entrée pouvant être amené en liaison d'entraînement avec l'arbre de sortie (GA) via un deuxième groupe associé de jeux de pignons de rapport (6, 8 ; 5, 7, 9, 10) pouvant être passés de façon sélective ;
- les jeux de pignons de rapport (5 - 10) sont respectivement disposés entre un des deux arbres d'entrée (GE1, GE2) et un des deux arbres intermédiaires (VG1, VG2) placés en liaison d'entraînement avec l'arbre de sortie (GA) via respectivement une constante de sortie (KA1, KA2) ;
- chaque jeu de pignons de rapport (5 - 10) comprend une roue fixe (11 - 13) disposée solidairement en rotation sur l'arbre d'entrée (GE1, GE2) associé et une roue folle (14 - 19) disposée sur l'arbre intermédiaire (VG1, VG2) concerné ;
- pour chaque arbre d'entrée (GE1, GE2), au moins les deux jeux de pignons de rapport (7, 9 ; 6, 8) internes à la boîte de vitesses étant disposés dans un plan radial commun avec les roues folles (16, 18 ; 15, 17) disposées sur différents arbres intermédiaires (VG1, VG2) en utilisant une roue fixe (12, 13) commune ;
- au moins deux roues folles (15, 16) disposées sur un des deux arbres intermédiaires (VG1, VG2) pouvant être couplées entre elles à partir de deux arbres d'entrée (GE1, GE2) différents de jeux de pignons de rapport (6, 7) internes à la boîte de vitesses associés, via un élément de changement de vitesse à spire (SW) ; et
- les deux constantes de sortie (KA1, KA2) étant disposées dans un plan radial commun en utilisant une roue d'entraînement en sortie (22) commune disposée sur l'arbre de sortie (GA) ;
**caractérisé en ce que** :
- les deux arbres d'entrée (GE1, GE2) sont disposés de façon connexe l'un par rapport à l'autre dans le plan axial et ressortent dans le plan axial de façon opposée respectivement hors d'une paroi avant de carter (26, 27) de la boîte de vitesses (2.3, 2.4, 2.8, 2.9, 2.13, 2.14, 2.18, 2.19) ; et
- le moteur à combustion interne (VM) est disposé au niveau de l'extrémité extérieure de boîte de vitesses (23, 24) du premier arbre d'entrée (GE1 ; GE2) et la machine électrique (EM) est disposée dans le plan axial de façon opposée au niveau de l'extrémité extérieure de boîte de vitesses (24, 23) de l'autre arbre d'entrée (GE2 ; GE1).

6. Entraînement hybride selon la revendication 5, **caractérisé en ce qu'**un élément de changement de vitesse à couplage (SK) est prévu pour le couplage des deux arbres d'entrée (GE1, GE2).

7. Entraînement hybride selon la revendication 5 et 6, **caractérisé en ce que** l'élément de changement de vitesse à couplage (SK) est disposé à l'intérieur de la boîte de vitesses (2.3, 2.4, 2.13, 2.14) entre les extrémités (28, 29) internes à la boîte de vitesses des deux arbres d'entrée (GE1, GE2).

8. Entraînement hybride selon l'une quelconque des revendications précédentes, **caractérisé en ce que** le premier arbre d'entrée (GE1 ; GE2) peut être relié à l'arbre d'entraînement (3) du moteur à combustion interne (VM) via un embrayage à friction (K1 ou K2) pouvant être passé et retiré.

9. Entraînement hybride selon l'une quelconque des revendications 1 à 7, **caractérisé en ce que** le premier arbre d'entrée (GE1 ; GE2) est relié de façon directe ou solidairement en rotation avec l'arbre d'entraînement (3) du moteur à combustion interne (VM), via un amortisseur de vibrations en torsion (4).

10. Entraînement hybride selon l'une quelconque des revendications 1 à 9, **caractérisé en ce que** l'autre arbre d'entrée (GE2 ; GE1) est relié de façon directe solidairement en rotation avec le rotor (25) de la machine électrique (EM).

11. Entraînement hybride selon l'une quelconque des revendications 1 à 9, **caractérisé en ce que** l'autre arbre d'entrée (GE2 ; GE1) est en liaison d'entraînement avec le rotor (25) de la machine électrique (EM) via un étage de boîte de vitesses (EK) comportant un système de multiplication de type Underdrive (i_{EK} > 1).

12. Entraînement hybride selon l'une quelconque des revendications précédentes, **caractérisé en ce qu'**au moins une roue fixe (11, 12, 13) commune est réalisée à partir de deux jeux de pignons de rapport (5, 6, 7, 8, 9, 10) disposés dans un plan radial commun, sous la forme d'une roue étagée.

13. Entraînement hybride selon l'une quelconque des revendications précédentes, **caractérisé en ce que** le premier arbre d'entrée (GE1 ; GE2) est en outre en liaison d'entraînement avec le rotor d'une deuxième machine électrique (EM2) disposée au niveau de l'extrémité extérieure de boîte de vitesses (23, 24) de cet arbre d'entrée (GE1 ou GE2).

14. Entraînement hybride selon la revendication 13, **caractérisé en ce que** la deuxième machine électrique (EM2) est réalisée sous la forme d'un générateur de démarreur.
